(19) Europäisches Patentamt
European Patent Office
Office européen des brevets

(11) EP 3 351 604 B1

(12) **EUROPEAN PATENT SPECIFICATION**

(45) Date of publication and mention of the grant of the patent:
**21.10.2020 Bulletin 2020/43**

(21) Application number: **16846471.7**

(22) Date of filing: **13.09.2016**

(51) Int Cl.:
***B32B 27/00*** (2006.01) ***B32B 27/40*** (2006.01)
***C09J 11/06*** (2006.01) ***C09J 201/00*** (2006.01)
***B32B 7/12*** (2006.01) ***B32B 25/08*** (2006.01)
***B32B 27/08*** (2006.01) ***B32B 27/30*** (2006.01)

(86) International application number:
**PCT/JP2016/077025**

(87) International publication number:
**WO 2017/047600 (23.03.2017 Gazette 2017/12)**

(54) **FILM FOR PLASTIC RESTORATION, SURFACE-PROTECTED ARTICLE, AND PROCESS FOR PRODUCING FILM FOR PLASTIC RESTORATION**

FILM ZUR KUNSTSTOFFWIEDERHERSTELLUNG, OBERFLÄCHENBESCHICHTETER ARTIKEL UND VERFAHREN ZUR HERSTELLUNG EINES FILMS ZUR KUNSTSTOFFWIEDERHERSTELLUNG

FILM DE RESTAURATION DE MATIÈRE PLASTIQUE, ARTICLE PROTÉGÉ EN SURFACE, ET PROCÉDÉ DE PRODUCTION D'UN FILM DE RESTAURATION DE MATIÈRE PLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2015 JP 2015185922**

(43) Date of publication of application:
**25.07.2018 Bulletin 2018/30**

(73) Proprietor: **JNC Corporation**
**Chiyoda-ku**
**Tokyo 100-8105 (JP)**

(72) Inventors:
- **HIRAKI, Soichiro**
**Ichihara-shi**
**Chiba 290-8551 (JP)**
- **OHGUMA, Koji**
**Tokyo 100-8105 (JP)**
- **MIYAUCHI, Hideki**
**Ichihara-shi**
**Chiba 290-8551 (JP)**
- **MAGATANI, Taro**
**Iga-shi**
**Mie 518-0033 (JP)**
- **IKEMOTO, Shigetaka**
**Iga-shi**
**Mie 518-0033 (JP)**

(74) Representative: **Becker & Kurig Partnerschaft Patentanwälte PartmbB**
**Bavariastrasse 7**
**80336 München (DE)**

(56) References cited:
**WO-A1-2008/102670**
**WO-A1-2016/010013**
**WO-A1-2016/010041**
**JP-A- H 071 896**
**JP-A- H05 200 895**
**JP-A- H09 286 960**
**JP-A- 2008 274 011**
**JP-A- 2008 539 107**
**JP-A- 2010 013 523**
**JP-A- 2014 218 586**
**US-A1- 2007 135 602**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 351 604 B1

## Description

### Technical Field

The invention relates to a film for plastic restoration. In particular, the invention relates to a film for plastic restoration using thermoplastic polyurethane, an article protected by the film, and a manufacturing method for the film.

### Background Art

If a headlight of an automobile is used for years, a cover is discolored or scratched with swirling rocks to reduce transparency, resulting in causing a fault such as reduction of a light quantity of the headlight. In most cases, the discoloration is caused by discoloration of a surface clear coating agent for a cover plastic as caused by irradiation with ultraviolet light. If the cover plastic is further continuously irradiated with ultraviolet light, a coat layer turns an inflammation-like state and is partially flaked into a whitened state. As other causes, the reduction is caused by deterioration of a polycarbonate resin itself being the cover plastic, or deterioration by corrosion from inside by heat of the light as caused by water penetrated into the headlight of the polycarbonate resin.

In order to solve these problems, a method for smoothing a surface of the cover plastic of the headlight with a polishing agent, or a method for applying a clear coating agent have been applied. However, when the above methods are applied, a working time is long, and working can only be made by an engineer having expertise, and also even if the working is completed, the effect has lasted only for about three months. Patent literature No. 1 discloses a method for recovering transparency of a transparent resin member, and the method of applying a coating composition, in which the composition contains, after pretreatment to be 0.1 micrometer or less in terms of arithmetic mean roughness Ra in surface roughness of a treated surface, a moisture-curable silicone resin or oligomer, a curing catalyst, a reactive silicone oil having at least one alkoxy group at a terminal of a molecule, and a silane coupling agent (for example, see claims 1 and 2 of Patent literature No. 1). Patent literature No. 2, published on January 21, 2016, after the priority date of the present application, discloses a very similar film, article and method, but without a bluish dye.

### Citation List

### Patent Literature

Patent literature No. 1: JP 2010-13523 A Patent literature No. 2: WO 2016 10041 A

### Summary of the Invention

### Technical Problem

The invention has been made in view of the problems described above, and an object of the invention is to provide a film for plastic restoration using thermoplastic polyurethane, in which transparency of plastic having reduced transparency by aged deterioration or weathering deterioration can be easily recovered by pasting the film thereonto. A further object is to provide a film for plastic restoration, the film being excellent in pasting characteristics and having suppressed paste remains.

### Solution to the Problem

The invention is defined in the appended claims. Dependent claims are directed to some beneficial embodiments. The present inventors have diligently continued to conduct study for solving the problems. As a result, the present inventors have found that use of a film for plastic restoration formed by combining a surface layer formed by permeation into thermoplastic polyurethane and containing a fluorine compound, with an adhesive layer improved in pasting characteristics and free from paste remains upon peeling the film results in providing a film for plastic restoration having capability of easily recovering, for a long period of time, transparency of plastic (for example, a plastic cover of a headlight) having reduced transparency by aged deterioration or weathering deterioration, and having an excellent effect of excellent pasting characteristics and suppressed paste remains, and have completed the invention.

As shown in Figure 1, for example, a film for plastic restoration according to a first aspect of the invention is film 10 for plastic restoration having base material film 11 formed of thermoplastic polyurethane; and adhesive layer 13 formed on a first surface side of base material film 11, wherein adhesive layer 13 is composed of at least one resin selected from an acrylic resin, a urethane-based resin, a rubber-based resin and a silicone-based resin, and the refractive index of the adhesive layer 13 is 1.40 to 1.70, and surface roughness of the adhesive layer 13 is 350 to 750 nanometers.

In addition, an expression "on a surface side" herein means that the layer may be laminated in contact with the surface, or the layer may be laminated through any other layer. An expression "on a surface" means that the layer is laminated in contact with the surface.

If the film is thus configured, the film for plastic restoration is formed, which is excellent in adhesiveness, and has suppressed paste remains, upon peeling the film for plastic restoration, by the adhesive layer having surface roughness of 350 to 750 nanometers.

In addition, the adhesive layer also serves as a buffer layer between the film for plastic restoration and a surface of an adherend, and allowing the adhesive layer to exist without a defect can decrease an influence of an impact event on the adherend in an application field as described above . In addition, the adhesive layer serving as the buffer layer can enter into a scratch formed on the surface of the adherend, and the adhesive layer is formed so as to have a refractive index close to the refractive index of the plastic to be restored, thereby making the scratch on the surface hard to see, and the transparency of the plastic having reduced transparency can be recovered.

In addition, the adhesive layer 13 contains a bluish dye.

If the film is thus configured, yellowishness (yellowing) resulting from deterioration of plastic can be counteracted, and the transparency of the plastic having reduced transparency can be recovered.

A film for plastic restoration according to a second aspect of the invention is configured in such a manner that, in film 10 for plastic restoration according to the first aspect of the invention, base material film 11 has surface layer 12 in which thermoplastic polyurethane and a curable resin composition are mixed on a side opposite to the first surface, and a content proportion of the curable resin composition gradually decreases from surface s1 of surface layer 12 toward a side of base material film 11, and the curable resin composition contains at least one fluorine compound ss selected from the group of fluorosilsesquioxane and a fluorosilsesquioxane polymer, and the curable resin.

If the film is thus configured, a film for plastic restoration in which stain-proof properties are excellent is formed, in which the fluorine compound is accumulated on the surface of the surface layer, surface modification of the base material film can be performed without adversely affecting flexibility of the thermoplastic polyurethane.

A film for plastic restoration according to a third aspect of the invention has a configuration in which, in film 10 for plastic restoration according to the second aspect of the invention, the fluorine compound has a cage structure, and the curable resin contains at least one compound having a (meth)acryloyl group.

If the film is thus configured, a film for plastic restoration is formed, in which the fluorine compound has properties of easily accumulating in an interface between air and a solid, and a speed of accumulation in the interface between air and the solid is increased. Further, the compound having the (meth)acryloyl group contained in the curable resin is permeated into the thermoplastic polyurethane, and therefore the surface layer integrated with the base material film is formed without adversely affecting flexibility of conventional thermoplastic polyurethane. Accordingly, in a two-layered structure film for plastic restoration, cracks are ordinarily easily caused with a low elongation percentage. However, the film for plastic restoration of the present application has high elongation at break, and even when the elongation percentage is adjusted to 100%, no cracks are caused.

A film for plastic restoration according to a fourth aspect of the invention has a configuration, in which, in film 10 for plastic restoration according to the second aspect or the third aspect of the invention, the fluorosilsesquioxane polymer is an addition polymer of fluorosilsesquioxane having at least one addition-polymerizable functional group, or an addition copolymer of fluorosilsesquioxane having one addition-polymerizable functional group and an addition-polymerizable monomer.

If the film is thus configured, a film for plastic restoration using the addition polymer suitable as the fluorosilsesquioxane polymer is formed.

A film for plastic restoration according to a fifth aspect of the invention has a configuration, in which, in film 10 for plastic restoration according to any one of the first aspect to the fourth aspect, the film has release film 14 provided on a surface of adhesive layer 13 that is opposite to base material film 11, and the surface roughness of a surface of release film 14 in contact with adhesive layer 13 is 350 to 800 nanometers.

If the film is thus configured, the surface roughness of adhesive layer 13 can be adjusted to 350 to 750 nanometers by release film 14 having surface roughness of 350 to 800 nanometers when the film for plastic restoration is produced. After the manufacture the adhesive surface of adhesive layer 13 can be protected by release film 14.

A film for plastic restoration according to a sixth aspect of the invention has a configuration, in which, in film 10 for plastic restoration according to the fifth aspect of the invention, adhesive layer 13 has a projection and recess shape exhibiting the surface roughness for 10 to 120 minutes after release film 14 is peeled off.

If the film is thus configured, when the film is laminated onto a target adherend, bubble (air) elimination rapidly progresses while using adhesive-layer recesses of adjacent non-attachment portions one after another, and the adhesive surfaces from which bubbles are eliminated are united with the adherend and adhered thereonto one after another. In particular, when the adhesive layer is sprayed with water and laminated, bubbles are preferably easier to be eliminated. Further, after lamination, the projection and recess shape are easily lost also by aid of applied pressure, and the film is pasted onto the adherend in following the adherend.

A film for plastic restoration according to a seventh aspect of the invention has a configuration, in which, in film 10 for plastic restoration according to the fifth aspect or the sixth aspect, at least one peeling agent selected from a fluorocarbon-based resin and a silicone resin is applied to a surface of release film 14 in contact with adhesive layer 13.

If the film is thus configured, the release film is easily peeled from the adhesive layer.

A surface protected article according to an eight aspect of the invention has the film for plastic restoration according to any one of the first aspect to the fourth aspect of the invention; and an article having a surface on which the film for plastic restoration is pasted by adhesive layer 13.

If the film is thus configured, a coating on the surface of the article can be protected by the film for plastic restoration uniformly pasted thereonto in following the article in association of loss of the projection and recess shape. Moreover, the surface can be protected from a scratch by the thermoplastic polyurethane having high impact resistance strength. Moreover, the stain-proof properties can also be improved by the surface layer. Further, the adhesive layer is excellent in the adhesion, and also excellent in heat resistance and weather resistance, and is free from the paste remains after peeling.

A method for producing a film for plastic restoration according to a ninth aspect of the invention has: a step of providing base material film 11 formed of thermoplastic polyurethane; a step of forming adhesive layer 13 containing a bluish dye on a first surface side of base material film 11, adhesive layer 13 having surface roughness of 350 to 750 nanometers on a side opposite to base material film 11; a step of applying a curable resin composition on a second surface of the base material film on a side opposite to the first surface to permeate the curable resin composition into base material film 11; and a step of irradiating the curable resin composition with ultraviolet light, wherein the curable resin composition contains at least one fluorine compound selected from the group of fluorosilsesquioxane and a fluorosilsesquioxane polymer, and a curable resin, the refractive index of the adhesive layer 13 is 1.40 to 1.70, and the adhesive layer 13 is composed of at least one resin selected from an acrylic resin, a urethane-based resin, a rubber-based resin and a silicone-based resin.

If the film is thus configured, the adhesive layer excellent in bonding properties can be formed. Further, the surface layer in which a part of the base material film and the curable resin composition are mixed can be formed without adversely affecting flexibility of the thermoplastic polyurethane. Further, the surface layer can be formed of the fluorine compound excellent in surface accumulation characteristics without adversely affecting flexibility of the thermoplastic polyurethane, and the stain-proof properties can be improved by the surface layer. Moreover, the adhesive layer can enter into the scratch formed on the surface of the adherend, and is made to have a refractive index close to a refractive index of plastic to be restored, thereby making the scratch on the surface hard to see, and the transparency of the plastic having reduced transparency can be restored.

### Advantageous Effects of the Invention

Transparency of plastic (for example, a plastic cover of a headlight) having reduced transparency caused by weathering deterioration or aged deterioration can be easily recovered for a long period of time by providing a film for plastic restoration of the invention. Further, the adhesive layer of the film for plastic restoration is colored, thereby making yellowing hard to see, and the transparency can be further recovered. Further, a surface of the plastic cover of the headlight can be protected by the film for plastic restoration, the film being excellent in stain-proof properties and pasting characteristics, and having suppressed paste remains, without adversely affecting flexibility of thermoplastic polyurethane.

### Brief Description of the Drawings

Figure 1 is a drawing showing a layer structure of film 10 for plastic restoration according to a first aspect of the invention.

Figure 2 is a graph showing a relationship between surface roughness (Ra) and pasting characteristics of an adhesive surface. High pasting characteristics can be exhibited in a region of 350 to 750 nanometers the surface roughness of the adhesive surface.

Figure 3 shows a SEM image of a cross section of Example 1 (film 10 for plastic restoration) . Coating agent A of Example 1 is permeated into a base material and is integrated with a base material layer, and an interface between the base material layer and a curable resin layer (surface layer) is not observed.

### Description of Embodiments

The present application is based on Japanese Patent Application No. 2015-185922 filed on September 18,

2015, in Japan. The invention may be further completely understood by the following detailed description. A further application scope of the invention will become apparent by the following detailed description. However, the detailed description and a specific embodiment are desirable embodiments of the invention, and described only for illustrative purposes. The applicant has no intention to dedicate to the public any described embodiment.

Hereinafter, an embodiment of the invention will be described with reference to drawings. In addition, in each Figure, an identical or similar sign is placed on a part identical or corresponding to each other, and overlapped description is omitted. Moreover, the invention is defined by the appended claims and is not limited by the embodiments described below.

(Film 10 for plastic restoration)

Film 10 for plastic restoration according to a first embodiment of the invention has, as shown in Figure 1, base material film 11 provided with surface layer 12, and adhesive layer 13. Film 10 for plastic restoration has release film 14 during production, but is used by peeling off release film 14 upon being pasted onto the surface of the article being the adherend (pasting object).

(Base material film 11)

As base material film 11, a film formed of a thermoplastic resin is desirably used.

Specific examples of the thermoplastic resin include a polyurethane-based resin, a polyester-based resin, an acetate-based resin, a polyether sulfone-based resin, a polycarbonate-based resin, a polyamide-based resin, a polyimide-based resin, a polyolefin-based resin, a (meth)acrylic resin, a polyvinylchloride-based resin, a polyvinylidenechloride-based resin, a polystyrene-based resin, a polyvinyl alcohol-based resin, a polyarylate-based resin, a polyphenylenesulfide-based resin and a norbornene resin. Specifically, thermoplastic polyurethane, polycaprolactone (PCL), an acrylic acid polymer, polyester, polyacrylonitrile, polyether ketone, polystyrene, polyvinyl acetate or a derivative thereof is preferred. The resins may be used alone, or in combination of two or more thereof.

A thickness of base material film 11 is not particularly limited, but when the present application invention is used as the film for plastic restoration, the thickness of the base material film is preferably 50 to 300 micrometers, and further preferably 100 to 200 micrometers. If the thickness of the base material film is 50 micrometers or more, mechanical strength of the base material is sufficient, and a layer can be formed on the base material. Moreover, if the film thickness is 300 micrometers or less, a thickness of the film for plastic restoration is not excessively increased.

(Surface layer 12)

Surface layer 12 is prepared first by applying a coating agent containing a curable resin composition on a surface of base material film 11. The curable resin composition is permeated into base material film 11, and mixed with a part of base material film 11. The part of base material film 11 is integrated with the curable resin composition by drying and curing to form surface layer 12. In surface layer 12, the layer is configured in such a manner that a content proportion of the curable resin composition gradually decreases from a surface of surface layer 12 toward base material film 11. Accordingly, the film for plastic restoration in which elongation at break is high can be formed, and even if the film for plastic restoration is elongated, no cracks are caused. In addition, the "curable resin composition" refers to a solid component (effective component) in the coating agent. The curable resin composition contains at least one fluorine compound selected from the group of fluorosilsesquioxane and a fluorosilsesquioxane polymer, and a curable resin.

The curable resin composition should contain 0.01 to 20% by weight of the fluorine compound based on the total amount of the fluorine compound and the curable resin. A content of the fluorine compound is preferably 0.1 to 10% by weight, and further preferably 1 to 5% by weight. If the content is 0.5% by weight or more, sufficient stain-proof properties can be provided for surface layer 12. Moreover, in order to obtain advantageous effects of the invention, the curable resin composition should contain 0.001 to 4% by weight of the fluorine component based on the total amount of the fluorine compound and the curable resin. A content thereof is preferably 0.01 to 2% by weight, and further preferably 0.1 to 1% by weight.

In coating of the coating agent containing the curable resin composition, a wet coating method for uniformly coating the fluorine compound and the curable resin thereon is preferably applied. As the wet coating method, a gravure coating process, or a die coating process can be applied. In addition, the coating agent in the present application may be only the fluorine compound and the curable resin without containing a solvent, or may be a mixture with a solvent.

The gravure coating process applies a system according to which a gravure roll produced by applying uneven embossing onto a surface is dipped into a coating liquid, scraping off the coating agent attached onto an uneven portion of the surface of the gravure roll by a doctor blade to accumulate the liquid in a recess portion, thereby accurately metering the liquid, and transferring the liquid onto the base material. The liquid having low viscosity can be coated at

a low thickness by the gravure coating process.

The die coating process applies a system according to which the liquid is coated on the base material while pressurizing and pushing out the liquid from an applying head called a die. Coating with high accuracy can be achieved by the die coating process. Further, the liquid is not exposed to open air during coating, and therefore a change in the concentration of the coating agent by drying is hard to occur.

Specific examples of other wet coating processes include a spin coating process, a bar coating process, a reverse coating process, a roll coating process, a slit coating process, a dipping process, a spray coating process, a kiss coating process, a reverse kiss coating process, an air knife coating process, a curtain coating process and a rod coating process. The coating method can be appropriately selected from the methods described above according to the thickness required therefor. Further, coating can be made at a line speed of several tens of meters per minute (for example, about 20 m/min), and therefore the product can be produced in mass to improve production efficiency by applying the wet coating process.

• Curable resin

The curable resin contained in the curable resin composition means a resin cured by ultraviolet light irradiation, electron beam irradiation or heating. Specific examples of the curable resin include a silicone resin, an acrylic resin, a (meth) acrylic resin, an epoxy resin, a melamine resin, an unsaturated polyester resin, a urethane resin, polyimide, polyetherimide, polyamideimide, a phenolic resin, an alkyd resin, a urea resin, a bismaleimide resin, a polyester urethane resin and a polyether urethane resin. Among the above curable resins, an active energy-ray curable resin that forms a film and causes curing by an active energy ray in a short period of time is preferred from a viewpoint of productivity. Here, the active energy ray means energy rays that can decompose a compound that generates active species to generate the active species. Specific examples of such an active energy ray include a photoenergy ray such as visible light, ultraviolet light, infrared light, X-rays, $\alpha$-rays, $\beta$ -rays, $\gamma$-rays and an electron beam. An ultraviolet-curable resin is further preferred. The ultraviolet-curable resin is ordinarily used by adding a photopolymerization initiator thereto. Specific examples of the photopolymerization initiator include various benzoin derivatives, benzophenone derivatives and phenyl ketone derivatives. An amount of addition of the photopolymerization initiator is preferably 1 to 10 parts by weight based on 100 parts by weight of the ultraviolet-curable resin.

Specific examples of the curable resin include a resin having an unsaturated bond capable of radical polymerization, such as a (meth)acrylate monomer, an unsaturated polyester resin, a polyester (meth)acrylate resin, an epoxy (meth)acrylate resin and a urethane (meth)acrylate resin. The above resins may be used alone, or in combination of two or more resins. A resin having a monofunctional or higher functional (meth)acryloyl group is particularly preferred.

• (Meth)acrylate monomer

Examples of the (meth)acrylate monomer include a compound obtained by allowing polyhydric alcohol to react with $\alpha$,$\beta$-unsaturated carboxylic acid. Specific examples include polyalkylene glycol di(meth)acrylate, ethylene glycol (meth)acrylate, propylene glycol (meth)acrylate, polyethylene polytrimethylolpropane di(meth)acrylate, trimethylolpropane tri(meth)acrylate, trimethylolpropanethoxy tri(meth)acrylate, trimethylolpropanediethoxy tri(meth)acrylate, trimethylolpropanetriethoxy tri(meth)acrylate, trimethylolpropanetetraethoxy tri(meth)acrylate, trimethylolpropanepentaethoxy tri(meth)acrylate, tetramethylolmethane tetra(meth)acrylate, tetramethylolpropane tetra(meth)acrylate, pentaerythritol tri(meth)acrylate, pentaerythritol tetra(meth)acrylate, pentaerythritol penta(meth)acrylate, dipentaerythritol penta(meth)acrylate and dipentaerythritol hexa(meth)acrylate. Moreover, specific examples also include a compound having a silsesquioxane skeleton, and a compound having (meth)acrylate in a functional group.

• Unsaturated polyester resin

Specific examples of the unsaturated polyester resin include a material obtained by dissolving, into a polymerizable monomer, a condensation product (unsaturated polyester) obtained by an esterification reaction between polyhydric alcohol and unsaturated polybasic acid (and when necessary, saturated polybasic acid).

The unsaturated polyester can be produced by performing polycondensation between unsaturated acid such as maleic anhydride and diol such as ethylene glycol. Specific examples include a material produced by applying, as an acid component, polybasic acid having a polymerizable unsaturated bond such as fumaric acid, maleic acid and itaconic acid, or anhydride thereof and allowing the acid component to react with, as an alcohol component, polyhydric alcohol such as ethylene glycol, propylene glycol, diethylene glycol, dipropylene glycol, 1,2-butanediol, 1,3-butanediol, 1,5-pentanediol, 1,6-hexandiol, 2-methyl-1,3-propanediol, 2,2-dimethyl-1,3-propanediol, cyclohexane-1,4-dimethanol, an ethyleneoxide adduct of bisphenol A and a propylene oxide adduct of bisphenol A, and when necessary, by further adding, as an acid component, polybasic acid having no polymerizable unsaturated bond such as phthalic acid, isophthalic

acid, terephthalic acid, tetrahydrophthalic acid, adipic acid and sebacic acid, or anhydride thereof.

• Polyester (meth)acrylate resin

Specific examples of the polyester (meth)acrylate resin include (1) (meth) acrylate obtained by allowing polyester having terminal carboxyl obtained from saturated polybasic acid and/or unsaturated polybasic acid and polyhydric alcohol to react with an epoxy compound containing $\alpha,\beta$-unsaturated carboxylic acid ester; (2) (meth)acrylate obtained by allowing polyester having terminal carboxyl obtained from saturated polybasic acid and/or unsaturated polybasic acid and polyhydric alcohol to react with hydroxy group-containing acrylate; and (3) (meth)acrylate obtained by allowing polyester having a terminal hydroxy group obtained from saturated polybasic acid and/or unsaturated polybasic acid and polyhydric alcohol to react with (meth)acrylic acid.

Specific examples of the saturated polybasic acid used as a raw material of polyester (meth)acrylate include polybasic acid having no polymerizable unsaturated bond such as phthalic acid, isophthalic acid, terephthalic acid, tetrahydrophthalic acid, adipic acid and sebacic acid, or anhydride thereof, and polymerizable unsaturated polybasic acid such as fumaric acid, maleic acid and itaconic acid, or anhydride thereof. Further, a polyhydric alcohol component is similar to the component for the unsaturated polyester.

• Epoxy (meth)acrylate resin

Specific examples of the epoxy (meth) acrylate resin include a material obtained by dissolving, into a polymerizable monomer, a compound (vinyl ester) having a polymerizable unsaturated bond formed by a ring opening reaction between a compound having glycidyl and carboxyl of a carboxyl compound having a polymerizable unsaturated bond such as acrylic acid.

The vinyl ester is produced by a publicly-known method, and specific examples thereof include epoxy (meth)acrylate obtained by allowing unsaturated monobasic acid such as acrylic acid or methacrylic acid to react with an epoxy resin.

Moreover, various epoxy resins may be allowed to react with dibasic acid such as bisphenol (for example, A type) or adipic acid, sebacic acid and dimer acid (Haridimer 270S: Harima Chemicals Group, Inc.) to give flexibility.

Specific examples of the epoxy resin as a raw material include bisphenol A diglycidyl ether and a high molecular weight homolog thereof, and novolak-type glycidylethers.

• Urethane (meth)acrylate resin

A urethane (meth)acrylate resin is an active energy-ray curable resin having a (meth)acryloyl group and a urethane skeleton, and specific examples include a ultraviolet-curable resin. The urethane (meth)acrylate resin can provide a cured film with flex (flexibility), and is particularly preferred.

The urethane (meth)acrylate resin may be a radical polymerizable unsaturated group-containing oligomer, prepolymer or polymer, which can be obtained by allowing a polyhydroxy compound or polyhydric alcohols to react with polyisocyanate, and then allowing the resulting material with a hydroxy group-containing (meth)acrylic compound. Polycarbonate-based urethane acrylate using polycarbonate-based polyols as polyhydric alcohols is particularly preferred. The polycarbonate-based urethane acrylate is used therefor, and thus a formed cured film can be provided with excellent stretching property and toughness.

Specific examples of the polyisocyanate include 2,4-tolylene diisocyanate and an isomer thereof, diphenylmethane diisocyanate, hexamethylene diisocyanate, hydrogenated xylylene diisocyanate, isophorone diisocyanate, xylylene diisocyanate, dicyclohexylmethane diisocyanate, naphthalene diisocyanate, triphenylmethane triisocyanate, Burnock D-750 (trade name: made by DIC Corporation), Crisvon NK (trade name : made by DIC Corporation), Desmodur L (trade name: made by Sumitomo Bayer Urethane Co., Ltd.), Coronate L (trade name: made by Nippon Polyurethane Industry Co., Ltd.), Takenate D102 (trade name: made by Mitsui Takeda Chemicals, Inc.) and Isonate 143L (trade name: made by Mitsubishi Chemical Corporation).

Examples of the polyhydroxy compound include polyester polyol, polyether polyol, polycarbonate polyol and polycaprolactone polyol, and specific examples include a glycerol-ethylene oxide adduct, a glycerol-propylene oxide adduct, a glycerol-tetrahydrofuran adduct, a glycerol-ethylene oxide-propylene oxide adduct, a trimethylolpropane-ethylene oxide adduct, a trimethylolpropane-propylene oxide adduct, a trimethylolpropane-tetrahydrofuran adduct, a trimethylolpropane-ethylene oxide-propylene oxide adduct, a dipentaerythritol-ethylene oxide adduct, a dipentaerythritol-propylene oxide adduct, a dipentaerythritol-tetrahydrofuran adduct and a dipentaerythritol-ethylene oxide-propylene oxide adduct. Specific examples of the polyhydric alcohols include ethylene glycol, diethylene glycol, triethylene glycol, polyethylene glycol, propylene glycol, dipropylene glycol, polypropylene glycol, 2-methyl-1,3-propanediol, 1,3-butanediol, an adduct of bisphenol A and propylene oxide or ethylene oxide, 1,2,3,4-tetrahydroxybutane, glycerol, trimethylolpropane, 1,2-cyclohexaneglycol, 1,3-cyclohexaneglycol, 1,4-cyclohexaneglycol, para-xylene glycol, bicyclohexyl-4,4-diol, 2,6-decalin glycol and 2,7-decalin glycol.

The hydroxy group-containing (meth)acrylic compound is not particularly limited, but hydroxy group-containing (meth)acrylic acid ester is preferred, and specific examples thereof include 2-hydroxyethyl (meth)acrylate, 2-hydroxypropyl (meth)acrylate, 3-hydroxybutyl (meth)acrylate, polyethyleneglycol mono(meth)acrylate, polypropyleneglycol mono(meth)acrylate, di(meth)acrylate of tris(hydroxyethyl)isocyanuric acid, and pentaerythritol tri(meth)acrylate.

The urethane (meth)acrylate resin can be prepared by a publicly-known method. As one example, the urethane (meth) acrylate resin can be obtained by allowing a predetermined amount of organic polyisocyanate (a) to react with a predetermined amount of polycarbonate polyol (b) under conditions of 70°C to 80°C until a remaining isocyanate concentration reaches a predetermined amount, and then adding a predetermined amount of (meth)acrylate (c) containing one or more hydroxy groups in a molecule to the resulting mixture, and allowing the resulting mixture to react therewith in the presence of a polymerization inhibitor (for example, hydroquinone monomethyl ether) at a temperature of 70°C to 80°C until the remaining isocyanate concentration reaches 0.1% by weight or less.

Weight average molecular weight (Mw) of the urethane (meth)acrylate resin is in the range of 3,000 to 500,000, and preferably in the range of 5,000 to 200,000. The cured film can be provided with flexibility by adjusting the weight average molecular weight (Mw) to the range. When the weight average molecular weight (Mw) is 3,000 or more, crosslinking density in the cured film is not excessively increased.

The curable resin contained in the curable resin composition preferably contains at least one compound having a (meth)acryloyl group.

Molecular weight of the compound having the (meth) acryloyl group is 50 to 30,000, and further preferably 50 to 5,000. The compound having the (meth) acryloyl group having molecular weight of 50 to 30,000 is easily permeated into thermoplastic polyurethane and is integrated with the thermoplastic polyurethane, but flexibility of the conventional thermoplastic polyurethane is not adversely affected.

A compound having a (meth)acryloyl group may be added to the curable resin contained in the curable resin composition separately from the resin, or if the molecular weight is within a proper range, the resin itself may be the compound having the (meth)acryloyl group. A content of the compound having the (meth) acryloyl group contained in the curable resin composition is 40% by weight to 100% by weight, and preferably 50% by weight to 100% by weight.

In addition to the curable resin having the (meth)acryloyl group, specific examples of the resin include an active energy-ray curable or thermosetting cationic polymerizable resin, anionic polymerizable resin, polyadditionable resin, polycondensatioablen resin, ring opening polymerizable resin and thermosetting resin other than the cationic polymerizable resin.

Specific examples of the cationic polymerizable resin and the anionic polymerizable resin include a compound having an anionic polymerizable functional group such as vinyl ether, propenyl ether, oxetanyl, oxiranyl and vinyl aryl; and a compound having an anionic polymerizable functional group such as vinylcarboxyl and cyanoacryloyl.

Further, specific examples of the cationic polymerizable resin include an epoxy resin such as a bisphenol type epoxy resin, a novolak type epoxy resin, a cycloaliphatic epoxy resin and an aliphatic epoxy resin; and an oxetane resin and a vinyl ether resin.

Specific examples of the polyadditionable resin, the polycondensationable resin and the ring opening polymerizable resin include the following resins.

Specific examples of the polyadditionable resin include, as an active hydrogen-containing compound that produces polyurethane by polymerization, low molecular weight diol (such as ethylene glycol, propylene glycol, 1,4-butanediol and 1,6-hexandiol); polyetherdiol (such as alkylene oxide (such as ethylene oxide, propylene oxide and butylene oxide) adduct of the low molecular weight diol exemplified above, a ring opening polymer of alkylene oxide (such as polytetramethylene glycol)); polyester diol (such as condensed polyester diol between aliphatic dicarboxylic acid (such as adipic acid, maleic acid and dimerized linolenic acid) or aromatic dicarboxylic acid (such as phthalic acid and terephthalic acid) and the low molecular weight diol exemplified above, and polylactonediol by a ring opening polymerization of ε-caprolactone); and low molecular weight diamine (such as isophorone diamine, 4,4'-diaminodicyclohexylmethane, 4,4'-diamino-3,3'-dimethyldicyclohexylmethane). Moreover, specific examples of diisocyanate include aromatic diisocyanate (such as tolylene diisocyanate, xylylene diisocyanate, naphthylene diisocyanate and diphenylmethane diisocyanate), cycloaliphatic diisocyanate (such as isophorone diisocyanate, dicyclohexylmethane diisocyanate, cyclohexylene diisocyanate and diisocyanate methylcyclohexane), and aliphatic diisocyanate (such as hexamethylene diisocyanate). Specific examples include a combination of a trifunctional or higher functional active hydrogen-containing compound (such as polyhydric alcohol such as trimethylolpropane, pentaerythritol and sorbitol; multivalent amine such as diethylene triamine and triethylene tetramine; and amino alcohol such as triethanolamine) and/or trifunctional or higher functional polyisocyanate (such as triphenylmethane triisocyanate, tris(isocyanatophenyl)thiophosphate, a 1:3 adduct of trimethylolpropane and hexamethylene diisocyanate, and a cyclic trimer of hexamethylene diisocyanate).

Specific examples of the epoxy compound include phenol ether-based glycidyl compound (such as diglycidyl ethers including bisphenol A and bisphenol F); an ether-based glycidyl compound (such as diglycidyl ether, triglycidyl ether of glycerol and polyallylglycidyl ether; an ester-based glycidyl compound (such as a copolymer of glycidyl (meth)acrylate and an ethylenic unsaturated monomer (such as acrylonitrile); and glycidyl amines (such as glycidyl ether of para-aminophenol), and a non-glycidyl type epoxy compound (such as epoxidized polyolefin and epoxidized soybean oil).

Specific examples of an epoxy curing agent include polyamines and (anhydrous)polycarboxylic acid.

Specific examples of the polyamines include aliphatic polyamines (such as alkylene diamines including ethylene diamine and tetramethylene diamine), polyalkylene polyamines (such as diethylene triamine and triethylene tetramine), alkyl or hydroxyalkyl amines including alkylaminopropylamine and aminoethylethanolamine), aromatic ring-containing aliphatic amines including xylylene diamine), and polyether polyamines including polyoxypropylene polyamine)); alicycle or heterocycle-containing aliphatic polyamines (such as N-aminoethyl piperazine, 1, 3-diaminocyclohexane and isophorone diamine); aromatic polyamines (such as phenylene diamine, toluene diamine and diaminodiphenylmethane); polyamide polyamines (condensate of the polyamines described above and dimer acid); benzoguanamine and/or alkyl guanamine and a modified product thereof; and dicyandiamide.

Specific examples of the polycondensationable resin include a copolycondensate of a polymer of aliphatic dicarboxylic acid esters (such as polybutylene adipate and polyethylene adipate), which forms polyester by polymerization; polycarbonate; and a coesterified product of two or more kinds thereof and a compound constituting the polymers with alkylene oxide (such as polyethylene glycol and polypropylene glycol) and a trifunctional or higher functional low molecular crosslinking agent (such as trimethylolpropane, glycerol and trimellitic acid).

Specific examples of a polyamide-based resin include a copolycondensate of 6-nylon, 6,6-nylon, 6,10-nylon, 11-nylon, 12-nylon and 4, 6-nylon and a coesterified product of two or more kinds thereof and a compound constituting the polymers with a compound constituting polyester or alkylene oxide (such as polyethylene glycol and polypropylene glycol) and a trifunctional or higher functional low molecular crosslinking agent (such as trimellitic acid).

Specific examples of a polyimide-based resin include a polycondenstate between pyromellitic acid and 1,4-diaminobenzene; and a copolycondensate of a compound constituting the polyimide with a compound constituting the polyamide, more specifically, polyamideimide. In addition to the above resins having two or less functional groups in a molecule, a polymerizable compound having three or more functional groups that form a crosslinking structure by polymerization is also included. Specific examples include a combination of a trifunctional or higher functional active hydrogen-containing compound (such as polyhydric alcohol including trimethylolpropane, pentaerythritol and sorbitol; multivalent amine including diethylene triamine and triethylenete tramine; and amino alcohol including triethanol amine), trimellitic acid and/or trifunctional or higher functional polyisocyanate (such as triphenylmethane triisocyanate, tris(isocyanatophenyl)thiophosphate, a 1:3 adduct of trimethylolpropane and hexamethylene diisocyanate, and a cyclic trimer of hexamethylene diisocyanate.

Specific examples of the ring opening polymerizable resin include lactones such as γ-butyrolactone, δ-valerolactone, β-methyl-δ-valerolactone and ε-caprolactone, and lactams such as ε-caprolactam, enantholactam and lauryllactam.

Further, as one example of a resin cured by a reaction other than radical polymerization, specific examples include silsesquioxane derivatives represented by the following formulas (A-1) to (A-3).

Formula 1

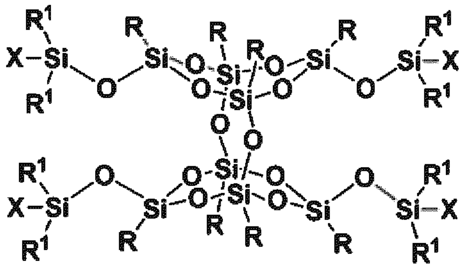

(A-1)

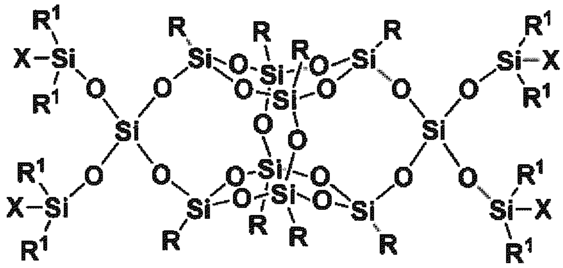

(A-2)

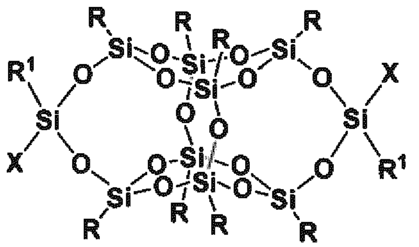

(A-3)

In formulas (A-1) to (A-3), R is each independently hydrogen, alkyl having 1 to 45 carbons in which arbitrary hydrogen may be replaced by fluorine and non-adjacent $-CH_2-$ may be replaced by -O- or cycloalkylene, cycloalkyl having 4 to 8 carbons and substituted or unsubstituted aryl. In a benzene ring of substituted aryl, arbitrary hydrogen may be replaced by alkyl having 1 to 10 carbons or halogen (e.g., fluorine). $R^1$ is each independently a group selected from alkyl having 1 to 4 carbons, cyclopentyl, cyclohexyl and phenyl. At least one X is hydrogen or a group having a polymerizable functional group, and the rest of X is a group defined in a manner similar to $R^1$. When R is hydrogen, only one X may be hydrogen. When X is a polymerizable functional group, at least two of X is preferably a polymerizable functional group.

The above compounds can be synthesized by a publicly-known production method. For example, JP 5050473 B can be referred to.

In addition, a polymerizable group of a group having a polymerizable functional group as represented by X is not particularly limited as long as the group is a functional group having capability of addition polymerization, ring opening polymerization or polycondensation, and specific examples include oxiranyl, oxiranylene, 3,4-epoxycyclohexyl, oxetanyl, oxetanylene, acryl or methacryl, alkenyl, amino and 2-oxapropane-1,3-dioyl. In addition, when the derivative has a plurality of polymerizable functional groups, the functional groups may be an identical group to or a different group from each other.

Specific examples include groups represented by the following formulas (a) to (h).

Formula 2

(a) 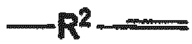

(b) 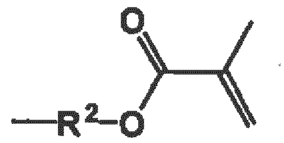

(c) 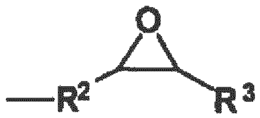

(d) 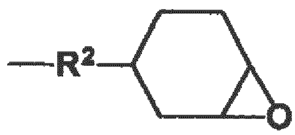

(e) 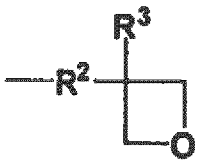

(f) 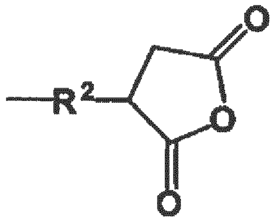

(g) $-R^2-NH_2$

(h) $-R^2-COOH$

In formulas (a) to (h), $R^2$ is alkylene having 1 to 10 carbons, and preferably alkylene having 1 to 6 carbons. One piece of $-CH_2$-in the alkylene may be replaced by -O- or 1,4-phenylene. Then, $R^3$ is hydrogen or alkyl having 1 to 6 carbons, and preferably is hydrogen.

Specific examples of the thermosetting resin other than the cationic polymerizable resin include a phenolic resin, an alkyd resin, a melamine-based resin, an epoxy-based resin, a urea resin, an unsaturated polyester resin, a urethane-based resin, thermosetting polyimide and a silicone resin. The above resins may be used alone, or in combination of two or more resins.

In view of processability, specific preferred examples include an epoxy-based resin such as a bisphenol A type epoxy resin, a bisphenol F type epoxy resin, a polyfunctional epoxy resin, a flexible epoxy resin, a brominated epoxy resin, a glycidyl ester type epoxy resin, a polymer type epoxy resin and a biphenyl type epoxy resin; a melamine-based resin such as a methylated melamine resin, a butylated melamine resin, a methyl etherified melamine resin, a butyl etherified melamine resin and a methyl butyl mixed etherified melamine resin; and a urethane-based resin obtained by reaction between a polyisocyanate compound (O=C=N-R-N=C=O) having two or more isocyanate groups and a polyol compound (HO-R'-OH) having two or more hydroxy groups, polyamine ($H_2N-R''-NH_2$) or a compound having active hydrogen ($-NH_2$, -NH or -CONH-) such as water.

The epoxy-based resin is excellent in heat resistance and chemical resistance, the melamine-based resin is excellent in heat resistance, hardness and transparency, and the urethane-based resin is excellent in low-temperature curability, and the above resins can be appropriately selected and used.

As a resin cured by a reaction other than radical polymerization, the cationic polymerizable resin is particularly preferred. A curing reaction can be rapidly performed by applying the cationic polymerization, and is preferred upon production. Moreover, whether the cationic polymerization progresses by light or heat can be appropriately selected depending on a kind of the cationic initiator to be used.

A content of the resin cured by the reaction other than radical polymerization is different depending on a kind of the resin or characteristics desired to be provided for the cured film. For example, the content of the resin cured by the reaction other than radical polymerization is preferably 10% by weight to 90% by weight based on the total amount (100% by weight) of the resin composition forming the cured film. The content is further preferably 20% by weight to 70% by weight. If the content of the resin cured by the reaction other than radical polymerization is 10% by weight to 90% by weight, the cured film after curing can have excellent hardness, toughness and heat resistance.

The photopolymerization initiator is not particularly limited. The photopolymerization initiator only needs to be an initiator that generates radicals by the active energy ray.

Specific examples of a compound used as the active energy ray polymerization initiator include benzophenone, Michler's ketone, 4,4'-bis(diethylamino)benzophenone, xanthone, thioxanthone, isopropylxanthone, 2,4-diethylthioxanthone, 2-ethylanthraquinone, acetophenone, 2-hydroxy-2-methylpropiophenone, 2-hydroxy-2-methyl-4'-isopropylpropiophenone, 1-hydroxycyclohexylphenyl ketone, isopropyl benzoin ether, isobutyl benzoin ether, 2,2-diethoxyacetophenone, 2,2-dimethoxy-2-phenylacetophenone, camphorquinone, benzanthrone, 2-methyl-1-[4-(methylthio)phenyl]-2-morpholinopropane-1-one, 2-benzyl-2-dimethylamino-1-(4-morpholinophenyl)-butanone-1,e thyl 4-dimethylaminobenzoate, isoamyl 4-dimethylaminobenzoate, 4,4'-di(t-butylperoxycarbonyl)benzophenone, 3,4,4'-tri(t-butylperoxycarbonyl)benzophenone, 2,4,6-trimethylbenzoyldiphenylphosphine oxide, 2-(4'-methoxystyryl)-4,6-bis(trichloromethyl)-s-triazine, 2-(3',4'-dimethoxystyryl)-4,6-bis(trichloromethyl)-s-triazin e, 2-(2',4'-dimethoxy styryl)-4,6-bis(trichloromethyl)-s-triazine, 2-(2'-methoxystyryl)-4,6-bis(trichloromethyl)-s-triazine, 2-(4'-pentyloxystyryl)-4,6-bis(trichloromethyl)-s-triazine, 4-[p-N,N-di(ethoxycarbonylmethyl]-2,6-di(trichloromethyl)-s-triazine, 1,3-bis(trichloromethyl)-5-(2'-chlorophenyl)-s-triazine, 1,3-bis(trichloromethyl)-5-(4'-methoxyphenyl)-s-triazine, 2-(p-dimethylaminostyryl)benzoxazole, 2-(p-dimethylaminostyryl)benzthiazole, 2-mercaptobenzothiazole, 3,3'-carbonylbis(7-diethylaminocoumarin), 2-(o-chlorophenyl)-4,4',5,5'-tetraphenyl-1,2'-biimidazole, 2,2'-bis(2-chlorophenyl)-4,4',5,5'-tetrakis(4-carboethoxyphe nyl)-1,2'-biimidazole, 2,2'-bis(2,4-dichlorophenyl-4,4',5,5'-tetraphenyl-1,2'-biimi dazole, 2,2'-bis(2,4-dibromophenyl-4,4',5,5'-tetraphenyl-1,2'-biimid azole, 2,2'-bis(2,4,6-trichlorophenyl-4,4',5,5'-tetraphenyl-1,2'-bi imidazole, 3-(2-methyl-2-dimethylaminopropionyl)carbazole, 3,6-bis(2-methyl-2-morpholinopropionyl)-9-n-dodecylcarbazole, 1-hydroxycyclohexylphenyl ketone, bis(η5-2,4-cyclopentadiene-1-yl)-bis(2,6-difluoro-3-(1H-pyrr ole-1-yl)-phenyl) titanium, 3,3',4,4'-tetra(t-butylperoxycarbonyl)benzophenone, 3,3',4,4'-tetra(t-hexylperoxycarbonyl)benzophenone, 3,3'-di(carbomethoxy-4,4'-di(t-butylperoxycarbonyl)benzophen one, 3,4'-di(carbomethoxy-4,3'-di(t-butylperoxycarbonyl)benzophen one and 4,4'-di(carbomethoxy-3,3'-di(t-butylperoxycarbonyl)benzophen one. The above compounds may be used alone, or two or more compounds are effectively mixed and used.

A content of the radical polymerization initiator is preferably 0.01% by weight to 20% by weight based on the total amount (100% by weight) of the radical polymerizable resin. The content is further preferably 1% by weight to 10% by weight.

The cationic initiator only needs to be a compound that can release a substance that starts the cationic polymerization by active energy ray irradiation or heat energy. Specific examples of such a curing reaction initiator include carboxylic acid, amine, an acid anhydride compound and an acid generator, and preferably include double salt being an onium salt releasing Lewis acid, or a derivative thereof.

Specific typified examples of the curing reaction initiator include a salt of a cation and an anion represented by the following formula (1).

$$[A]^{m+}[B]^{m-} \quad (1)$$

In formula (1), cation $[A]^{m+}$ is preferably an onium ion, and is represented by the following formula (2), for example.

$$[(\alpha)_aQ]^{m+} \quad (2)$$

In formula (2), $\alpha$ is an organic group that has 1 to 60 carbons and may contain any number of atoms other than the carbon atom. Then, a is an integer from 1 to 5. Then, the a groups $\alpha$ may be each independently identical to or different from each other. Moreover, at least one of $\alpha$ is preferably an organic group having an aromatic ring.

Q is an atom or an atomic group selected from the group of S, N, Se, Te, P, As, Sb, Bi, O, I, Br, Cl, F and N=N. Moreover, when a valence of Q in cation $[A]^{m+}$ is taken as q, an equation: m = a - q holds (in which, N = N is treated as a valence of 0) .

Meanwhile, anion $[B]^{m-}$ is preferably a halide complex, and is represented by the following formula (3), for example.

$$[LX_b]^{m-} \quad (3)$$

In formula (3), L is metal or semimetal (metalloid) being a central atom of the halide complex, and is B, P, As, Sb, Fe, Sn, Bi, Al, Ca, In, Ti, Zn, Sc, V, Cr, Mn, or Co. X is a halogen atom. Then, b is an integer from 3 to 7. Moreover, when a valence of L in anion $[LX_b]^{m-}$ is taken as p, an equation: m = b - p holds.

Specific examples of anion $[LX_b]^{m-}$ represented by formula (3) include tetrafluoroborate ($BF_4$), hexafluorophosphate ($PF_6$), hexafluoroantimonate ($SbF_6$), hexafluoroarsenate ($AsF_6$) and hexachloroantimonate ($SbCl_6$).

Moreover, as anion $[B]^{m-}$, an anion represented by the following formula (4) is preferably used. The same rule also applies to L, X and b.

$$[LX_{b-1}(OH)]^{m-} \quad (4)$$

Specific examples of anion $[B]^{m-}$ further include a perchlorate ion ($ClO_4^-$), a trifluoromethyl sulfite ion ($CF_3SO_3^-$), a fluorosulfonic acid ion ($FSO_3^-$), a toluenesulfonic acid anion and a trinitrobenzenesulfonic acid anion.

Among such onium salts, the curing reaction initiator in the invention is further preferably an aromatic onium salt exemplified by the following (A) to (C). Among the following salts, one kind may be used alone, or two or more kinds can be mixed and used.

(A) An aryldiazonium salt such as phenyldiazonium hexafluorophosphate, 4-methoxyphenyldiazonium hexafluoroantimonate and 4-methylphenyldiazonium hexafluorophosphate.
(B) A diaryliodonium salt such as diphenyliodonium hexafluoroantimonate, di(4-methylphenyliodonium hexafluorophosphate and di(4-t-butylphenyl)iodonium hexafluorophosphate.
(C) A triarylsulfonium salt such as triphenylsulfonium hexafluoroantimonate, tris(4-methoxyphenyl)sulfonium hexafluorophosphate, diphenyl-4-thiophenoxyphenylsulfonium hexafluoroantimonate, diphenyl-4-thiophenoxyphenylsulfonium hexafluorophosphate, 4,4'-bis(diphenylsulfonio)phenylsulfide-bis-hexafluoroantimo nate, 4,4'-bis(diphenylsulfonio)phenylsulfide-bis-hexafluorophosph ate, 4,4'-bis[di(β-hydroxyethoxy)phenylsulfonio]phenylsulfide-bis -hexafluoroantimonate, 4,4'-bis[di(β-hydroxyethoxy)phenylsulfonio]phenylsulfide-bis -hexafluorophosphate, 4-[4'-(benzoyl)phenylthio]phenyl-di-(4-fluorophenyl)sulfoniu m hexafluoroantimonate, and 4-[4'-(benzoyl)phenylthio]phenyl-di-(4-fluorophenyl)sulfoniu m hexafluorophosphate.

Further, the curing reaction initiator in the invention may be a mixture of an iron arene complex or an aluminum complex, and silanols such as triphenylsilanol.

Specific examples of the iron arene complex include ($\eta^5$-2,4-cyclopentadiene-1-yl)[(1,2,3,4,5,6-$\eta$)-(1-methylethyl )benzene]-iron-hexafluorophosphate, and specific examples of the aluminum complex include tris(acetylacetonato)aluminum, tris(ethylacetoacetato)aluminum and tris(salicylaldehydato)aluminum.

Among the above agents, from a viewpoint of practical use, the curing reaction initiator in the embodiment of the invention is preferably an aromatic iodonium salt, an aromatic sulfonium salt or an iron arene complex.

Specific examples of the cationic initiator that generates cationic species by irradiation with ultraviolet light include a hexafluoroantimonate salt, a pentafluorohydroxyantimonate salt, a hexafluorophosphate salt and a hexafluoroarsenate salt. As the cationic initiator, for example, commercially available products such as UVACURE1590 (trade name: made by Daicel-Allnex Ltd.), CD-1010, CD-1011, CD-1012 (trade names for all: made by Sartomer USA, LLC), Irgacure 264 (trade name: made by BASF SE) and CIT-1682 (trade name: made by Nippon Soda Co., Ltd.) can also be used.

Specific examples of the cationic initiator that generates cationic species by applying heat treatment thereto include an aryldiazonium salt, an aryliodonium salt, an arylsulfonium salt and an arene-ion complex. As the cationic initiator, for example, a commercial item such as PP-33, CP-66, CP-77 (trade names for all: made by ADEKA Corporation), FC-509 (trade name: made by 3M Company), UVE1014 (trade name: made by G.E.), San-Aid SI-60L, San-Aid SI-80L, San-Aid SI-100L, San-Aid SI-110L, San-Aid SI-150L (trade names for all: made by Sanshin Chemical Industry Co., Ltd.) and CG-24-61 (trade name: made by BASF Japan) are preferably used. Further, the cationic initiator may be a compound of a chelate compound of metal such as aluminum and titanium and acetoacetic acid or diketones, and silanol such as triphenylsilanol, or a compound of a chelate compound of metal such as aluminum and titanium and acetoacetic acid or diketones, and phenols such as bisphenol S.

In particular, San-Aid SI-60L has capability of applying a heating temperature upon curing of a comparatively low temperature (80°C to 150°C), and is excellent in storage stability, and therefore is excellent in film-forming properties, and is preferred.

A content of the cationic polymerization initiator is preferably 0.01% by weight to 20% by weight based on the total amount (100% by weight) of the cationic polymerizable resin. The content is further preferably 0.2% by weight to 10% by weight.

The curable resin used in the coating agent of the invention may be dissolved in a solvent such as an organic solvent, and used. The solvent is not particularly limited. A general organic solvent can be used.

Specific examples of the solvent include a hydrocarbon-based solvent (such as benzene and toluene), an ether-based solvent (such as diethyl ether, tetrahydrofuran, diphenyl ether, anisole and dimethoxybenzene), a halogenated hydrocarbon-based solvent (such as methylene chloride, chloroform and chlorobenzene), a ketone-based solvent (such as acetone, methyl ethyl ketone and methyl isobutyl ketone), an alcohol-based solvent (methanol, ethanol, propanol, isopropanol, butyl alcohol and t-butyl alcohol), a nitrile-based solvent (such as acetonitrile, propionitrile and benzonitrile), an ester-based solvent (such as ethyl acetate and butyl acetate), a carbonate-based solvent (such as ethylene carbonate, propylene carbonate), an amide-based solvent (such as N,N-dimethylformamide and N,N-dimethylacetamide), a hydrochlorofluorocarbon-based solvent (such as HCFC-141b and HCFC-225), a hydrofluorocarbon ($HFC_s$)-based solvent (such as $HFC_s$ having 2 to 4 carbons and 5 and 6 or more carbons), a perfluorocarbon-based solvent (such as perfluoropentane and perfluorohexane), an alicyclic hydrofluorocarbon-based solvent (such as fluorocyclopentane and fluorocyclobutane), an oxygen-containing fluorine-based solvent (such as fluoroether, fluoropolyether and fluoroketone, fluoroalcohol), an aromatic fluorine solvent (such as $\alpha,\alpha,\alpha$-trifluorotoluene and hexafluorobenzene) and water. The solvents

may be used alone or in combination of two or more kinds.

A content of the solvent is preferably 20 parts by weight to 500 parts by weight based on the total amount (100 parts by weight) of the resin composition forming the cured film. The content is further preferably 50 parts by weight to 300 parts by weight.

An additive may be added to the coating agent in addition the materials described above. For example, in order to provide the surface layer with hardness and scratch resistance of the film, a filler may be added thereto. In order to improve coatability, a leveling agent may be added thereto. In addition thereto, an additive such as a weather-resistant agent and an antifoaming agent may be added thereto.

More specifically, within the range in which an effect of the cured film formed by the coating agent is not adversely affected, any component may be further incorporated into the coating agent, such as an active energy ray sensitizer, a polymerization inhibitor, a polymerization initiation aid, the leveling agent, a wettability improver, a surfactant, a plasticizer, an ultraviolet light absorber, an antioxidant, an antistatic agent, a silane coupling agent, an inorganic filler typified by silica and alumina, and an organic filler.

Specific examples of the leveling agent include, as a commercial item, an acrylic surface conditioner BYK-350, BYK-352, BYK-354, BYK-356, BYK-381, BYK-392, BYK-394, BYK-3441, BYK-3440 and BYK-3550 (trade names for all: made by BYK Japan K.K.).

Specific examples of the weather-resistant agent include benzotriazoles, hydroxyphenyl triazines, benzophenones, salicylates, cyanoacrylates, triazines or dibenzoylresorcinols. The above ultraviolet light absorbers may be used alone, or a plurality of ultraviolet light absorbers may be combined and used. With regard to the ultraviolet light absorber, a kind or a combination thereof is preferably appropriately selected based on a wavelength of ultraviolet rays to be desirably absorbed.

A silicon compound may be added to the coating agent as a surface modification component.

For example, a general surface modifier containing the silicone compound as a main component can be used. Specific examples of the silicone compound include BYK-UV3500, BYK-UV-3570 (trade names for all: made by BYK Japan K.K), TEGO Rad2100, 2200N, 2250, 2500, 2600, 2700 (trade names for all: made by Evonik Degussa Japan Co., Ltd.); and X-22-2445, X-22-2455, X-22-2457, X-22-2458, X-22-2459, X-22-1602, X-22-1603, X-22-1615, X-22-1616, X-22-1618, X-22-1619, X-22-2404, X-22-2474, X-22-174DX, X-22-8201, X-22-2426, X-22-164A and X-22-164C (trade names for all: made by Shin-Etsu Chemical Co., Ltd.).

Other resin components may be added to the coating agent. Specific examples thereof include a thermoplastic resin and rubber. Characteristics inherent to the resin (such as mechanical physical properties, surface or interface characteristics and compatibility) can be modified by adding the thermoplastic resin and the rubber as other resins.

Specific examples of the thermoplastic resin include the resins described below.

Polyethylene, polypropylene, polyvinyl chloride, polyvinylidene chloride, polystyrene, an acrylonitrile-styrene resin, an acrylonitrile-butadiene-styrene resin, a poly(meth)acrylate resin, ultra-high molecular weight polyethylene, poly-4-methylpentene, syndiotactic polystyrene, polyacetal, polycarbonate, polyphenylene oxide, polyphenylene sulfide, polysulfone, polyether sulfone, polyetheretherketone, polyarylate (such as U polymer: Unitika, Ltd. trade name, and Vectra: Polyplastics Co., Ltd. trade name), polyimide (such as Kapton: Toray Industries, Inc., and AURUM: Mitsui Chemicals, Inc. trade name), polyetherimide, polyamideimide.

Polyamide such as nylon 6, nylon 6, 6, nylon 6, 10, nylon MXD6 and nylon 6, T (trade names for all: made by E. I. du Pont de Nemours & Co.).

Polyester such as polyethylene terephthalate, polybutylene terephthalate and polyethylene-2,6-naphthalene dicarboxylate.

Further, a fluorocarbon resin such as polytetrafluoroethylene and polyvinylidene fluoride.

The curable resin used for surface layer 12 is used as the coating agent to be applied onto the base material film. Therefore, the coating agent is preferably in a liquid state. When the curable resin is in a solid state, as described above, the curable resin may be dissolved in the solvent and used as the coating agent.

A concentration of the curable resin in the coating agent can be selected in such a manner that viscosity of the coating agent has a level according to a coating method such as a wet coating process. The concentration is preferably 1 to 80% by weight, and further preferably 3 to 60% by weight. The concentration of the curable resin in the coating agent can be adjusted by using a solvent. A general organic solvent such as methyl ethyl ketone and methyl isobutyl ketone can be used for the solvent. In addition, when solubility in the solvent is reduced by a length of a fluoroalkyl group of the fluorine compound contained in the curable resin composition, a fluorine-based organic solvent may be used. Moreover, publicly-known other additives, for example, a leveling agent such as a surfactant may be added to the coating agent when necessary. If the leveling agent is added thereto, surface tension of the coating agent can be controlled to suppress a surface defect caused upon forming the layer, such as cissing and a crater.

Specific examples of curing treatment for curing the curable resin include curing treatment by ultraviolet irradiation, heating, or electron beam irradiation. In addition, when the coating film contains the solvent, ordinarily, the coating film is preferably heated in the range of 70°C to 200°C for several tens of minutes to remove the solvent remaining

in the coating film, and then subjected to the curing treatment. As the curing by the ultraviolet irradiation, the coating liquid may be irradiated with ultraviolet rays having a wavelength of 200 to 400 nanometers from a UV lamp (for example, a high-pressure mercury lamp, an ultra-high-pressure mercury lamp, a metal halide lamp or a high power metal halide lamp) for a short period of time (within the range of several seconds to several tens of seconds). Moreover, as the curing by heating, for example, the application liquid only needs to be heated at a temperature of ordinarily preferably 180°C to 250°C, and further preferably 200°C to 250°C. On the occasion, the application liquid only needs to be heated for 30 to 90 minutes when an oven is used, and for 5 to 30 minutes when a hot plate is used. Moreover, as the curing by the electron beam irradiation, the coating liquid may be irradiated with a low-energy electron beam from a self-shielding low-energy-electron accelerator of 300 keV or less.

Surface layer 12 is formed by integration of a part of base material film 11 with the curable resin composition. A concentration of the curable resin composition gradually decreases toward an inside of base material film 11, and therefore a boundary between a portion mixed with the curable resin composition and a portion not mixed with the curable resin composition in base material film 11 becomes unclear. Accordingly, as one example, an amount of application of the curable resin composition (effective component) on surface layer 12 is preferably 0.5 to 20 g/$m^2$, and further preferably 1.0 to 10 g/$m^2$.

Surface layer 12 contains the fluorine compound and further contains the curable resin. The fluorine compound has properties according to which the fluorine compound is easily accumulated in an interface between air and a solid under a hydrophobic atmosphere (for example, in air). The reason is conceivably that the fluorine compound containing a fluorine group has hydrophobicity higher than the hydrophobicity of the resin, and therefore is drawn onto an air side. Accordingly, in a process of coating, the fluorine compound is accumulated near the surface of surface layer 12, and a concentration of the fluorine compound is biased on a surface side. As a result, an inclined structure of the concentration of the fluorine compound is formed near the surface of surface layer 12.

Moreover, the fluorine compound has excellent characteristics as a stain-proof material, and therefore stain-proof properties on the surface of surface layer 12 can be improved.

• Fluorosilsesquioxane

Silsesquioxane contained in the curable resin composition is a generic term for polysiloxane represented by [(R-$SiO_{1.5}$)n] (where, R is any substituent) . A structure of the silsesquioxane is ordinarily classified into a random structure, a ladder structure and a cage structure according to an Si-O-Si skeleton thereof. Further, the cage structure is classified into T-8, T-10, and T-12 types according to the number of Si contained therein.

The fluorosilsesquioxane used for the film for plastic restoration of the invention only needs have properties according to which the fluorosilsesquioxane is easily accumulated in the interface between air and the solid under the hydrophobic atmosphere (for example, in air). If the fluorosilsesquioxane accumulated in the interface is applied, an effect of the stain-proof properties can be sufficiently exhibited.

Surface modification of surface layer 12 can be performed in a small amount and effectively by such excellent surface accumulation properties of the fluorosilsesquioxane.

Above all, as one example, fluorosilsesquioxane having a molecular structure represented by the following formula (I) is particularly preferred.

Formula 3

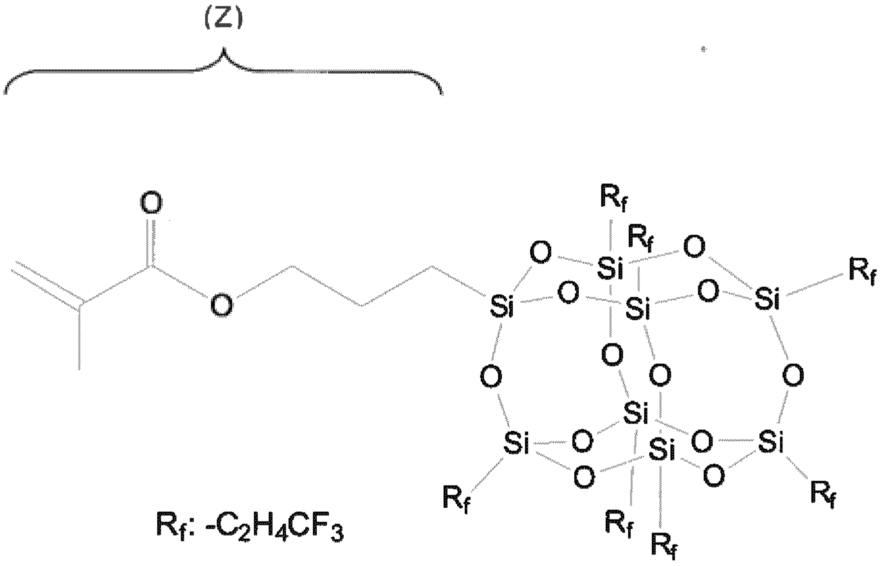

$R_f$: $-C_2H_4CF_3$

(I)

More specifically, among the random structure, the ladder structure and the cage structure, each being the structure of the silsesquioxane, the silsesquioxane particularly preferably has the cage structure. If the cage structure fluorosilsesquioxane is used, a speed at which the fluorosilsesquioxane is accumulated in the interface can be increased in comparison with the speed of fluorosilsesquioxane having structure other than the cage structure.

In consideration of ease of availability, silsesquioxane is preferably of any one of types of T8, T10 and T12.

Substituent (R) in formula $[(R\text{-}SiO_{1.5})n]$ described above is preferably is fluoroalkyl group ($R_f$). In consideration of solubility in the solvent, the number of carbon atoms of Rf is preferably 1 to 8. Rf may be a linear group or a branched group. Specific examples of the linear group include $-CH_2CH_2CF_3$, $-CH_2CH_2CF_2CF_3$, $-CH_2CH_2CF_2CF_2CF_3$, $-CH_2CH_2CF_2CF_2CF_2CF_3$, $-CH_2CH_2CF_2CF_2CF_2CF_2CF_3$ and $-CH_2CH_2CF_2CF_2CF_2CF_2CF_2CF_3$. Specific examples of the branched group include $-CH_2CH_2CF(CF_3)_2$, $-CH_2CH(CF_3)CF_2CF_3$, $-CH(CF_3)CH_2CF_2CF_3$, $-CH_2C(CF_3)_2CF_3$, $-C(CF_3)_2CH_2CF_3$, $-CH_2CH_2CF_2CF(CF_3)_2$, $-CH_2CH_2CF(CF_3)CF_2CF_3$ and $-CH_2CH_2C(CF_3)_2CF_3$. In addition, Rf may be a group different from each other or an identical group for all.

In formula (I), the fluorosilsesquioxane having "3-(methacryloyloxy)propyl" in one Si is illustrated, but the group is not limited to the above functional group. For example, when a position of "3-(methacryloyloxy)propyl" is taken as Z, a group in the position can be replaced by any other functional group. Specifically, as Z, any group may be applied from hydrogen, a hydroxy group, alkenyl, or halogen (chlorine, bromine and iodine), alkoxy, phenoxy, polyalkyleneoxy, -COOH, 2-oxapropane-1,3-dioyl, alkoxycarbonyl, alkenyloxycarbonyl, oxiranyl, 3,4-epoxycyclohexyl, oxetanyl, oxetanylene, -NH-, $-NH_2$, -CN, -NCO, alkynyl, cycloalkenyl, acryloyloxy, methacryloyloxy, urethane acryloyl, urethane methacryloyl, -SH and $-PH_2$. Further, as Z, the groups (hydrogen to $-PH_2$) through alkylene may be applied. Alkylene to be bound with Si is not particularly limited, but alkylene having 1 to 8 carbons is preferred, and propylene in which the number of carbon atoms is 3 is particularly preferred. However, a group having alkanoloxy, a group having halogenated sulfonyl and a group having an $\alpha$ -haloester group are not included in the selection range.

• Fluorosilsesquioxane polymer

The fluorosilsesquioxane polymer, when the functional group is the polymerizable group, can be formed into a homopolymer of fluorosilsesquioxane, or a copolymer with any other general monomer (for example, an addition-polymerizable monomer), or may be formed into a copolymer of fluorosilsesquioxane having different polymerizable groups with each other. On the above occasion, as a polymerizing method, any of publicly known methods can be adopted. Thus, the fluorosilsesquioxane used for the film for plastic restoration of the present application may be the fluorosilsesquioxane polymer.

More specifically, the fluorosilsesquioxane represented by formula (I) may, as Z, have an addition-polymerizable functional group, or may have, as Z, an addition-polymerizable functional group through alkylene. Specific examples of the addition-polymerizable functional group include a group having a radically polymerizable functional group of a terminal olefin type or an internal olefin type; a group having a cationic polymerizable functional group such as vinyl ether and propenyl ether; and a group having an anionic polymerizable functional group such as vinyl carboxyl and cyanoacryloyl,

but specific preferred examples include a radically polymerizable functional group.

The radically polymerizable functional group is not particularly limited as long as the group is radically polymerized, and specific examples thereof include methacryloyl, acryloyl, allyl, styryl, α-methylstyryl, vinyl, vinyl ether, vinyl ester, acrylamide, methacrylamide, N-vinylamide, maleate, fumarate and N-substituted maleimide, and among the above groups, a group containing (meth)acryl or styryl is preferred. Here, the (meth)acryl is a generic term for acryl and methacryl, and means acryl and/or methacryl. The same shall apply hereinafter.

Specific examples of the radically polymerizable functional group having the (meth) acryl include a group represented by the following formula (II). In formula (II), $Y^1$ represents alkylene having 2 to 10 carbons, preferably alkylene having 2 to 6 carbons, and further preferably propylene. Moreover, X represents hydrogen or alkyl having 1 to 3 carbons, and preferably hydrogen or methyl.

Moreover, specific examples of the radically polymerizable functional group having the styryl include a group represented by the following formula (III). In formula (III), $Y^2$ represents a single bond or alkylene having 1 to 10 carbons, preferably a single bond or alkylene having 1 to 6 carbons, and further preferably a single bond or ethylene. Moreover, vinyl is bound to any of carbons of a benzene ring, and preferably bound to carbon in a para position relative to $Y^2$.

Formula 4

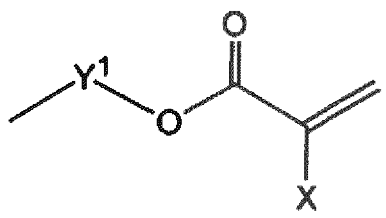

(II)

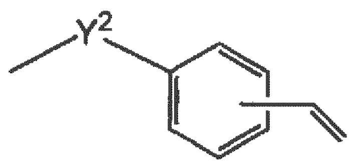

(III)

The addition-polymerizable monomer includes a monomer having a crosslinkable functional group and a monomer having no crosslinkable functional group. The addition-polymerizable monomer having the crosslinkable functional group only needs be a compound having one or two or more addition-polymerizable double bonds, and may be any of a vinyl compound, a vinylidene compound and a vinylene compound, for example, and specific examples thereof include a (meth)acrylic compound or a styrene compound.

Specific examples of the (meth)acrylic compound include (meth)acrylic acid, (meth)acrylate, and also (meth)acrylamide and (meth)acrylonitrile.

Specific examples of the (meth)acrylic compound of the addition-polymerizable monomer include (meth)acrylate having a crosslinkable functional group. Specific examples of such a crosslinkable functional group include epoxy such as glycidyl and epoxycyclohexyl, oxetanyl, isocyanato, acid anhydride, carboxyl and hydroxyl, but preferably include epoxy such as glycidyl, and oxetanyl. Specific examples of the (meth)acrylate having the crosslinkable functional group include (meth)acrylic acid, hydroxyalkyl (meth)acrylate such as 2-hydroxyethyl (meth)acrylate and 2-hydroxypropyl (meth)acrylate; epoxy-containing (meth)acrylate such as glycidyl (meth)acrylate; alicyclic epoxy-containing (meth)acrylate such as 3,4-epoxycyclohexylmethyl (meth)acrylate; oxetanyl-containing (meth)acrylate such as 3-ethyl-3-(meth)acryloyloxymethyl oxetane; 2-(meth)acryloyloxyethyl isocyanate; γ-(methacryloyloxypropyl)trimethoxysilane; (meth)acrylate-2-aminoethyl, 2-(2-bromopropionyloxy)ethyl (meth)acrylate, 2-(2-bromoisobutyryloxy)ethyl (meth)acrylate; 1-(meth)acryloxy-2-phenyl-2-(2,2,6,6-tetramethyl-1-piperidin yloxy)ethane, 1-(4-(4-(meth)acryloxy)ethoxyethyl)phenylethoxy)piperidine, 1,2,2,6,6-pentamethyl-4-piperidyl (meth)acrylate and 2,2,6,6-pentamethyl-4-piperidyl (meth)acrylate.

Specific examples of the styrene compound having one addition-polymerizable double bond include a styrene compound having a crosslinkable functional group. Specific examples of such a crosslinkable functional group include epoxy such as glycidyl, oxetanyl, halo, amino, isocyanato, acid anhydride, carboxyl, hydroxyl, thiol and siloxy.

Specific examples of the styrene compound having the crosslinkable functional group include o-aminostyrene, p-styrene chlorosulfonic acid, styrene sulfonic acid and a salt thereof, vinylphenylmethyldithiocarbamate, 2-(2-bromopropionyloxy)styrene, 2-(2-bromoisobutyryloxy) styrene, 1-(2-(4-vinylphenyl)methoxy)-1-phenylethoxy)-2,2,6,6-tetrame thylpiperidine, and a compound represented by the following formula.

Formula 5

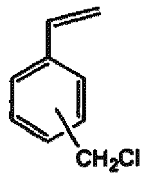
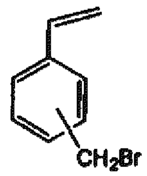
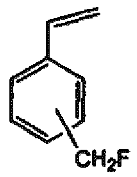
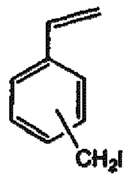

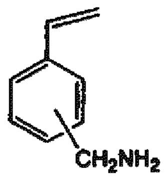
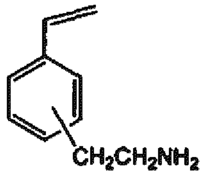
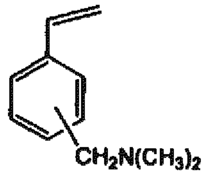
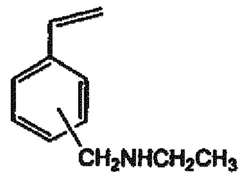

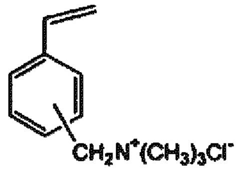
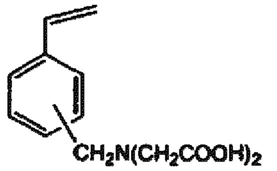
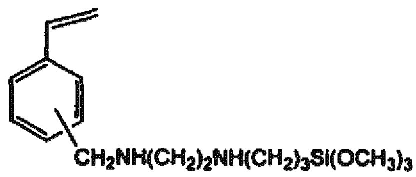

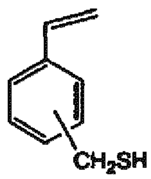
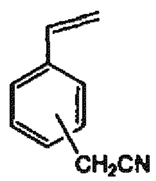
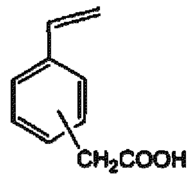
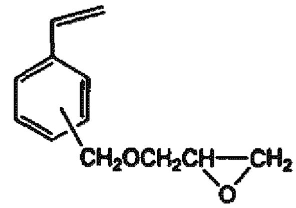

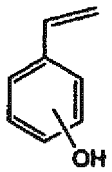
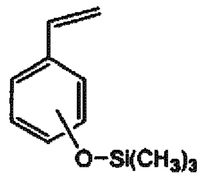
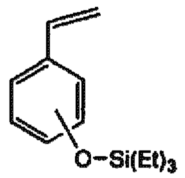
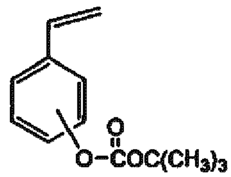

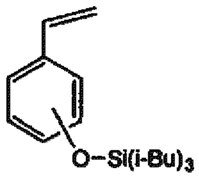
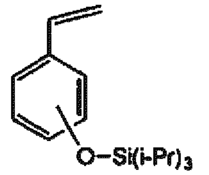
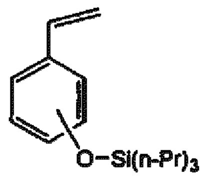
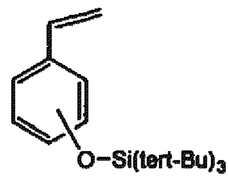

In addition to the addition-polymerizable monomer, in order to control compatibility with the curable resin, leveling properties, and an amount of the crosslinkable functional group in the copolymer, an addition-polymerizable monomer other than the addition-polymerizable monomer described above can be simultaneously used when necessary.

Specific examples of the addition-polymerizable monomer having no crosslinkable functional group include an (meth)acrylic compound having one addition-polymerizable double bond and no crosslinkable functional group, and a styrene compound having one addition-polymerizable double bond and no crosslinkable functional group. Specific examples of such a (meth)acrylic compound include alkyl (meth)acrylate such as methyl (meth)acrylate, ethyl (meth)acrylate, n-propyl (meth)acrylate, isopropyl (meth)acrylate, butyl (meth)acrylate, isobutyl (meth)acrylate, t-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate and stearyl (meth)acrylate; aryl (meth)acrylate such as phenyl (meth)acrylate and toluyl (meth)acrylate; arylalkyl (meth)acrylate such as benzyl (meth)acrylate; alkoxyalkyl (meth)acrylate such as 2-methoxyethyl (meth)acrylate, 3-methoxypropyl (meth)acrylate and 3-methoxybutyl (meth)acrylate; and an ethyleneoxide adduct of (meth)acrylic acid.

Specific examples of the (meth) acrylic compound having one addition-polymerizable double bond and no crosslinkable functional group further include fluoroalkyl (meth)acrylate such as trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate and 2-perfluorohexadecylethyl (meth)acrylate.

Further, specific examples of the (meth)acrylic compound having one addition-polymerizable double bond and no crosslinkable functional group include a (meth) acrylic compound having a silsesquioxane skeleton. Specific examples of such a (meth)acrylic compound having the silsesquioxane skeleton include 3-(3,5,7,9,11,13,15-heptaethylpentacyclo[9.5.1.1$^{3,9}$.1$^{5,15}$.1$^{7,13}$ ]octasiloxane-1-yl)propyl (meth)acrylate, 3-(3,5,7,9,11,13,15-heptaisobutylpentacyclo[9.5.1.1$^{3,9}$.1$^{5,15}$. 1$^{7,13}$]octasiloxane-1-yl)propyl (meth)acrylate, 3-(3,5,7,9,11,13,15-heptaisooctylpentacyclo[9.5.1.1$^{3,9}$.1$^{5,15}$.1 $^{7,13}$]octasiloxane-1-yl)propyl (meth)acrylate, 3-(3,5,7,9,11,13,15-heptacyclopentylpentacyclo[9.5.1.1$^{3,9}$.1$^{5, 15}$.1$^{7,13}$]octasiloxane-1-yl) propyl (meth) acrylate, 3-(3,5,7,9,11,13,15-heptaphenylpentacyclo[9.5.1.1$^{3,9}$.1$^{5,15}$.1$^{7,1 3}$]octasiloxane-1-yl)propyl (meth)acrylate, 3-[(3,5,7,9,11,13,15-heptaethylpentacyclo [9.5.1.1$^{3,9}$.1$^{5,15}$.1$^{7,1 3}$]octasiloxane-1-yloxy)dimethylsilyl]propyl (meth)acrylate, 3-[(3,5,7,9,11,13,15-heptaisobutylpentacyclo[9.5.1.1$^{3,9}$.1$^{5,15}$. 1$^{7,13}$]octasiloxane-1-yloxy)dimethylsilyl]propyl (meth)acrylate, 3-[(3,5,7,9,11,13,15-heptaisooctylpentacyclo[9.5.1.1$^{3,9}$.1$^{5,15}$. 1$^{7,13}$]octasiloxane-1-yloxy)dimethylsilyllpropyl (meth)acrylate, 3-[(3,5,7,9,11,13,15-heptacyclopentylpentacyclo[9.5.1.1$^{3,9}$.1$^{5 ,15}$.1$^{7,13}$]octasiloxane-1-yloxy)dimethylsilyl]propyl (meth)acrylate, and 3-[(3,5,7,9,11,13,15-heptaphenylpentacyclo[9.5.1.1$^{3,9}$.1$^{5,15}$.1$^{7 ,13}$]octasiloxane-1-yloxy)dimethylsilyl]propyl (meth)acrylate. Specific examples of the styrene compound having one addition-polymerizable double bond and no crosslinkable functional group include styrene, vinyltoluene, $\alpha$-methylstyrene and p-chlorostyrene.

Specific examples of the styrene compound having one addition-polymerizable double bond and no crosslinkable functional group further include a styrene compound containing silsesquioxane. Specific examples of such a styrene derivative containing the silsesquioxane include octasiloxane (T8 silsesquioxane) having a 4-vinyl phenyl group, such as 1-(4-vinylphenyl)-3,5,7,9,11,13,15-heptaethylpentacyclo[9.5. 1.1$^{3,9}$.1$^{5,15}$.1$^{7,13}$]octasiloxane, 1-(4-vinylphenyl)-3,5,7,9,11,13,15-heptaisobutylpentacyclo(9 .5.1.1$^{3,9}$.1$^{5,15}$.1$^{7,13}$]octasiloxane, 1-(4-vinylphenyl)-3,5,7,9,11,13,15-heptaisooctylpentacyclo[9 .5.1.1$^{3,9}$.1$^{5,15}$.1$^{7,13}$]octasiloxane, 1-(4-vinylphenyl)-3,5,7,9,11,13,15-heptacyclopentylpentacycl o[9.5.1.1$^{3,9}$.1$^{5,15}$.1$^{7,13}$]octasiloxane and 1-(4-vinylphenyl)-3,5,7,9,11,13,15-heptaphenylpentacyclo[9.5 .1.1$^{3,9}$.1$^{5,15}$.1$^{7,13}$] octasiloxane; and octasiloxane (T-8 type silsesquioxane) having a 4-vinyl phenylethyl group such as 3-(3,5,7,9,11,13,15-heptaethylpentacyclo[9.5.1.1$^{3,9}$.1$^{5,15}$.1$^{7,13}$ ]octasiloxane-1-yl)ethylstyrene, 3-(3,5,7,9,11,13,15-heptaisobutylpentacyclo[9.5.1.1$^{3,9}$.1$^{5,15}$.1 $^{7,13}$]octasiloxane-1-yl)ethylstyrene, 3-(3,5,7,9,11,13,15-heptaisooctylpentacyclo[9.5.1.1$^{3,9}$.1$^{5,15}$.1 $^{7,13}$]octasiloxane-1-yl)ethylstyrene, 3-(3,5,7,9,11,13,15-heptacyclopentylpentacyclo[9.5.1.1$^{3,9}$.1$^{5, 15}$.1$^{7,13}$]octasiloxane-1-yl)ethylstyrene, 3-(3,5,7,9,11,13,15-heptaphenylpentacyclo[9.5.1.1$^{3,9}$.1$^{5,15}$.1$^{7,1 3}$]octasiloxane-1-yl)ethylstyrene, 3-((3,5,7,9,11,13,15-heptaethylpentacyclo[9.5.1.1$^{3,9}$.1$^{5,15}$.1$^{7,1 3}$]octasiloxane-1-yloxy)dimethylsilyl)ethylstyrene, 3-((3,5,7,9,11,13,15-heptaisobutylpentacyclo[9.5.1.1$^{3,9}$.1$^{5,15}$. 1$^{7,13}$] octasiloxane-1-yloxy)dimethylsilyl)ethylstyrene, 3-((3,5,7,9,11,13,15-heptaisooctylpentacyclo[9.5.1.1$^{3,9}$.1$^{5,15}$. 1$^{7,13}$]octasiloxane-1-yloxy)dimethylsilyl)ethylstyrene, 3-((3,5,7,9,11,13,15-heptacyclopentylpentacyclo[9.5.1.1$^{3,9}$.1$^{1 ,15}$.1$^{7,13}$]octasiloxane-1-yloxy)dimethylsilyl)ethylstyrene and 3-((3,5,7,9,11,13,15-heptaphenylpentacyclo[9.5.1.1$^{3,9}$.1$^{5,15}$.1$^{7 ,13}$]octasiloxane-1-yloxy)dimethylsilyl)ethylstyrene.

Further, specific examples of the addition-polymerizable monomer other than the addition-polymerizable monomer described above also include a macromonomer having a main chain derived from styrene, (meth)acrylate, siloxane and alkylene oxide, for example, ethyleneoxide or propyleneoxide, and having one polymerizable double bond.

Specific examples of the addition-polymerizable monomer also include a compound having two addition-polymerizable double bonds. Specific examples of the compound having two addition-polymerizable double bonds include 1,3-butanediol=di(meth)acrylate, 1,4-butanediol=di(meth)acrylate, 1,6-hexandiol=di(meth)acrylate, polyethyleneglycol=di(meth)acrylate, diethyleneglycol=di(meth)acrylate, neopentylglycol=di(meth)acrylate, triethyleneglycol=di(meth)acrylate, tripropyleneglycol=di(meth)acrylate, hydroxypivalateneopentylglycol=di(meth)acrylate, trimethylolpropane=di(meth)acrylate, bis[(meth)acryloyloxyethoxy]bisphenol-A, bis[(meth)acryloyloxyethoxy]tetrabromobisphenol A, bis[(meth)acryloxypolyethoxy]bisphenol-A, 1,3-bis(hydroxyethyl)5,5-dimethylhydantoin, 3-methylpentanediol=di(meth)acrylate, a di(meth)acrylate-based monomer such as di(meth)acrylate of a hydroxypivalateneopentylglycol compound and bis[(meth)acryloyloxypropyl]tetramethyldisiloxane) and divinylbenzene.

Further, specific examples also include a macromonomer having a main chain derived from styrene, (meth)acrylate, siloxane, and alkylene oxide, for example, ethylene oxide or propylene oxide, and having two polymerizable double bonds.

Specific examples of the addition-polymerizable monomer also include a compound having three or more addition-polymerizable double bonds. Specific examples of the compound having three or more addition-polymerizable double bonds include trimethylolpropane=tri(meth)acrylate, pentaerythritol=tri(meth)acrylate, pentaerythritol=tetra(meth)acrylate, dipentaerythritol=monohydroxypenta(meth)acrylate, tris(2-hydroxyethylisocyanate)=tri(meth)acrylate, tris(diethyleneglycol)trimellite=tri(meth)acrylate, 3,7,14-tris[(((meth)acryloyloxypropyl)dimethylsiloxy)]-1,3,5 ,7,9,11,14-heptaethyltricyclo(7.3.3.1$^{5,11}$]heptasiloxane, 3,7,14-tris[(((meth)acryloyloxypropyl)dimethylsiloxy)]-1,3,5 ,7,9,11,14-heptaisobutyltricyclo[7.3.3.1$^{5,11}$]heptasiloxane, 3,7,14-tris[(((meth)acryloyloxypropyl)dimethylsiloxy)]-1,3,5 ,7,9,11,14-heptaisooctyltricyclo[7.3.3.1$^{5,11}$]heptasiloxane, 3,7,14-tris[(((meth)acryloyloxypropyl)dimethylsiloxy)]-1,3,5 ,7,9,11,14-heptacyclopentyltricyclo[7.3.3.$1^{5,11}$]heptasiloxane, 3,7,14-tris[(((meth)acryloyloxypropyl)dimethylsiloxy)]-1,3,5 ,7,9,11,14-heptaphenyltricyclo[7.3.3.$1^{5,11}$]heptasiloxane, octakis(3-(meth)acryloyloxypropyldimethylsiloxy)octasilsesqu ioxane and octakis(3-(meth)acryloyloxypropyl)octasilsesquioxane.

Further, specific examples also include a macromonomer having a main chain derived from styrene, (meth)acrylate, siloxane, and alkylene oxide, for example, ethylene oxide or propylene oxide, and having three or more polymerizable double bonds.

The addition-polymerizable monomer is preferably a (meth) acrylic compound, further preferably (meth) acrylate, and still further preferably lower alkyl (for example, 1 to 3 carbons) ester or ester having a crosslinkable functional group of (meth)acrylic acid.

The polymer is an addition polymer of fluorosilsesquioxane or an addition copolymer with any other addition-polymerizable monomer, and when the polymer is the copolymer, the polymer may be a sequence-ordered copolymer such as a block copolymer, or a random copolymer, but is preferably a random copolymer. Moreover, the polymer may have a crosslinked structure, or may be a graft copolymer.

(Adhesive layer 13/release film 14)

As shown in Figure 1, adhesive layer 13 is formed by applying an adhesive onto a side of a reverse surface of base material film 11 subjected to stain-proof treatment (or to be subjected to the stain-proof treatment) by surface layer 12. Adhesive layer 13 may be formed directly on the surface of base material film 11, or may be laminated through any other layer between base material film 11 and adhesive layer 13.

As the adhesive used for adhesive layer 13, an acrylic adhesive, a rubber-based adhesive, a urethane-based adhesive, or a silicone-based adhesive can be used. In an application requiring long-term durability from an aspect of a product design, the acrylic adhesive having excellent heat resistance and weather resistance is preferred.

In adhesive layer 13 of the present application, in view of pasting characteristics to an article serving as the adherend (pasting object), projections and recesses are provided on the surface of the adhesive layer.

Specific examples of the acrylic adhesive include an acrylic adhesive containing an acrylic copolymer obtained by copolymerizing a monomer component mainly containing acrylate with a monomer component having a functional group such as a carboxyl group and a hydroxy group.

Specific examples of the acrylate include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, cyclohexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, isobornyl (meth)acrylate and 1-adamanthyl (meth)acrylate. Among the above alkyl (meth)acrylates, one kind or two or more kinds may be used.

The following monomer component can be copolymerized with the alkyl (meth) acrylate. Specific examples of the copolymerizable monomer component include a monomer containing a carboxyl group, such as itaconic acid, maleic acid, crotonic acid, isocrotonic acid, fumaric acid, (meth)acrylic acid, carboxyethyl (meth)acrylate and carboxypentyl (meth)acrylate; a glycidyl group-containing monomer such as 2-hydroxyethyl (meth)acrylate, 3-hydroxypropyl (meth)acrylate, 4-hydroxybutyl (meth)acrylate, 6-hydroxy hexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)-methyl acrylate; a glycidyl group-containing monomer such as glycidyl (meth)acrylate and methylglycidyl (meth)acrylate; a cyanoacrylate-based monomer such as acrylonitrile and methacrylonitrile; a nitrogen-containing monomer such as N,N-dimethylaminoethyl (meth)acrylate, N,N-dimethylaminopropyl (meth)acrylamide, N,N-dimethyl (meth)acrylamide, N,N-diethyl (meth)acrylamide, N-isopropyl (meth)acrylamide, N-hydroxyethyl (meth) acrylamide, (meth)acryloyl morpholine, N-vinyl-2-piperidone, N-vinyl-3-morpholinone, N-vinyl-2-caprolactam, N-vinyl-2-pyrrolidone, N-vinyl-1,3-oxazine-2-one, N-vinyl-3,5-morpholinedione, N-cyclohexylmaleimide, N-phenylmaleimide, N-acryloyl pyrrolidine and t-butylaminoethyl (meth) acrylate; and a monomer such as styrene or a derivative of styrene and vinyl acetate. Among the above monomers, one kind or two or more kinds may be copolymerized with (meth)acrylate and used when necessary.

Specific examples of the rubber adhesive include natural rubber, grafted natural rubber, polyisoprene, polybutadiene, styrene-butadiene rubber, acrylonitrile-butadiene rubber, polychloroprene, a styrene-butadiene-styrene block copolymer, a styrene-isoprene-styrene block copolymer, a styrene-ethylene-butylene-styrene block copolymer and a styrene-ethylene-propylene-styrene block copolymer.

Specific examples of the urethane-based adhesive include an adhesive composed of polyurethane obtained by condensing a compound having an isocyanate group and a hydroxy group.

Specific examples of the compound (isocyanate) having the isocyanate group include TDI (tolylene diisocyanate), MDI (diphenylmethane diisocyanate), HDI (hexamethylene diisocyanate) and NDI (naphthalene diisocyanate).

Specific examples of the compound (polyol) having the hydroxy group include polyethylene glycol, polypropylene glycol, polytetramethylene ether glycol, polyethylene adipate glycol, polybutylene adipate glycol, polybutylene azelate glycol and polycaprolactone glycol.

As the silicone-based adhesive, any type of a peroxide curing type and a peroxide addition type can be used.

The adhesive used in the invention preferably contains at least one kind selected from the group of butyl acrylate and 2-ethylhexyl acrylate, and at least one kind of carboxyl group-containing monomer selected from the group of acrylic acid and methacrylic acid.

In the adhesive used in the invention, a glass transition temperature (Tg) is increased, for improving the heat resistance and the weather resistance, by adding a hard component such as methyl acrylate and vinyl acetate thereto, for example. Specific examples of such a hard component used for adjusting the glass transition temperature include methyl acrylate, vinyl acetate, methyl methacrylate and acrylonitrile.

In addition, the ultraviolet light absorber and the light stabilizer may be added thereto when necessary for further improving various characteristics such as the weather resistance.

A proportion of the hard component is 10 to 80% by weight, preferably 20 to 70% by weight, and further preferably 30 to 60% by weight based on the total amount of the adhesive.

Weight average molecular weight (Mw) of the acrylic copolymer is 50,000 to 2,000,000, preferably 100,000 to 1,500,000, and further preferably 150,000-1,000,000.

Number average molecular weight (Mn) is 10,000 to 500,000, preferably 10,000 to 400,000, and further preferably 10,000 to 300,000.

A variance value thereof is 1 to 20, preferably 1 to 15, and further preferably 2 to 10.

The glass transition temperature is -70°C to 0°C, preferably -40°C to 0°C, further preferably -30°C to 0°C, and particularly preferably -20°C to 0°C.

In order to apply, onto release film 14 or base material film 11, the composition to be formed into adhesive layer 13, the application can be performed by a gravure coating process, a bar coating process, a spray coating process, a spin coating process, a roll coating process, a die coating process, a knife coating process, an air knife coating process, a hot-melt coating process or a curtain coating process which is ordinarily applied thereto.

A thickness of adhesive layer 13 is 10 to 100 micrometers, preferably 15 to 50 micrometers and further preferably 25 to 45 micrometers from an aspect of adhesion after pasting.

In adhesive layer 13, surface projections and recesses are physically formed by laminating release film 14 on which projections and recesses are formed to transfer the projections and recesses thereto. As the surface projections and recesses of adhesive layer 13 having excellent pasting characteristics, arithmetic mean roughness R(a) is 300 nanometers to 800 nanometers, preferably 350 nanometers to 750 nanometers, and further preferably 400 nanometers to 700 nanometers.

As release film 14, a plastic film of a polyester-based resin, a polyolefin-based resin, cellophane or paper subjected to filling treatment, such as glassine paper, can be used, for example. Further, such a resin film can be used as the resin film of polyethylene terephthalate, polyethylene and polypropylene prepared by coating, on one surface or both surfaces, a release agent such as a fluorocarbon resin, a silicone-based resin, and long chain alkyl group-containing carbamate.

A thickness of the release film is somewhat different depending on a material used, but is ordinarily 10 to 250 micrometers and preferably 20 to 200 micrometers.

Table 1 Evaluation of release agents

| Release agent | Processability | Releasability |
|---|---|---|
| Fluorine-based agent | Marginal | Good |
| Silicone-based agent | Good | Good |
| Long chain alkyl group-containing carbamate | Good | Marginal |

With regard to the surface projections and recesses formed on release film 14, arithmetic mean roughness R(a) is 350 to 850 nanometers, preferably 400 to 800 nanometers, and further preferably 450 to 750 nanometers. As a method of forming the projections and recesses, a publicly-known method can be applied.

In addition, arithmetic mean roughness R(a) is expressed in terms of a value obtained by extracting a curve by only a reference length (lower-case character of L in the following expression) from a roughness curve in the direction of a mean line thereof, totaling absolute values of deviations of the extracted portion from the mean line to the measured curve, and averaging the total. An influence of one scratch on a measured value preferably becomes very small, and stable results are obtained, and therefore such a case is preferred.

Expression 1

$$Ra = \frac{1}{\ell} \int_0^{\ell} \left| f(x) \right| dx$$

The adhesive layer of the invention that is limited and compounded as described above, even after being released from the limited release film, can have a projection and recess shape and a dimension for a short period of time (10 to 120 minutes, preferably 20 to 90 minutes, and particularly preferably 30 to 60 minutes immediately after releasing the film), and then after pasting onto a target adherend is started, the shape is easily lost also by aid of applied pressure, and the adhesive layer is uniformly pasted thereon in following the adherend. As another feature of the above pasting, when a release film without the surface roughness as described above is used, or when an adhesive layer out of the limited composition is used, loss of the projection and recess shape is excessively quickly caused, or hardness is excessively high to lose uniformity in attachment to the adherend, also to hinder elimination of air bubbles and water bubbles.

In a protection film having the adhesive layer of the invention, bubble elimination rapidly progresses during lamination while using adhesive-layer recesses of adjacent non-attachment portions one after another (adhesive surfaces from which bubbles are eliminated are united with the adherend and adhered thereonto one after another).

Moreover, a new and innovative pasting method has been found out, in which, when such a pasting method is applied, even when the film is directed toward long-term use after completion of pasting, gradual development of bubbles is significantly small without developing, between the adherend and the adhesive layer in which the protection film is actually used, local physical defective parts caused by bubbles and chemical defective parts containing air (oxygen), and even during long-term use, initial mechanical properties (chipping resistance and impact resistance), initial heat resistance, initial weather resistance and an initial release properties (no paste remains) are substantially maintained. In addition, in a compounded body requiring a longer time in the pasting characteristics, a tendency of poor long-term retention capability of the initial characteristics is observed.

A refractive index of the adhesive layer is 1.40 to 1.70, preferably 1.45 to 1.65, and further preferably 1.45 to 1.60. If the refractive index of the adhesive layer is adjusted in the above range, a value close to the refractive index of general plastic is attained, and therefore the transparency of the plastic can be recovered by pasting the film for plastic restoration of the invention onto the plastic having reduced transparency caused by weathering deterioration.

The adhesive used for the invention contains a bluish dye. In the formed adhesive layer, yellowish color resulting from deterioration of plastic for a headlight cover can be counteracted by incorporating the bluish dye into the adhesive. The reason is that blue has a complementary color relationship with yellow, and complementary colors have properties of counteracting mutual colors when being overlapped.

The bluish dye should be compounded in $1 \times 10^{-6}$ to 1 part by weight based on 100 parts by weight of the adhesive (for example, an acrylic adhesive) . The proportion is preferably $1 \times 10^{-5}$ to $1 \times 10^{-1}$ part by weight, and further preferably $1 \times 10^{-4}$ to $1 \times 10^{-1}$ part by weight. If the proportion is $1 \times 10^{-6}$ part by weight or more, a sufficient counteracting effect on the yellowish color can be obtained, and if the proportion is 1 part by weight or less, reduction of transparency can be avoided.

Specific examples of the bluish dye include an organic or inorganic dye or pigment, such as a phthalocyanine-based dye, an anthraquinone-based dye, a condensed polycyclic dye, a polymethine-based dye, a condensed azo-based dye, an azo-based dye, an isoindolinone-based dye or a benzophenone-based dye.

The film for plastic restoration of the present application can cause restoration of a scratch or yellowing caused in plastic by weathering deterioration to recover the transparency by pasting the film thereonto. Further, the film for plastic restoration of the present application has high water repellency and stain-proof properties by the surface layer, and simultaneously high pasting characteristics to the plastic cover for a headlight of a vehicle by the adhesive layer. The surface can be smoothed, and reflectivity can be suppressed, and a gloss feeing can be provided by the surface layer. Further, the curable resin is permeated into thermoplastic polyurethane to form the surface layer integrated with a part of the base material film. Accordingly, even if the film has high elongation at break, and the surface of an article as the adherend (pasting object) has a complicated shape such as a curved surface, the film can be easily pasted thereonto. Further, the pasting characteristics (elimination of water or air bubbles) to the adherend are significantly improved by controlling the surface roughness of the adhesive surface. Further, the adhesive layer is excellent in heat resistance and weather resistance, and therefore no paste remains are caused even after releasing the film. Moreover, the adhesive surface of the adhesive layer is protected with the release film having high releasability until the film is pasted onto the adherend, and therefore the article can be distributed and conveyed without deteriorating the adhesion.

(Surface protected article)

The surface protected article according to a second embodiment of the invention will be described. Specific examples of the article as the adherend (pasting object) to which the film for plastic restoration of the present application is pasted thereonto include an automobile, aircraft and a ship. The film is effective in restoring and protecting a plastic cover part of the headlight, a cover plastic covering an LED bulb of a traffic light, and a plastic window in the above articles.
Further, the film can be used for, for example, a window, a building material, digital signage, packaging and an office article, and can be used in a wide range of fields such as electronics, security and industries. Further, the film can be applied to restoration and protection for a surface of a plastic product used in a nursing care and medical field.

## Examples

Results of evaluation of characteristics of a film for plastic restoration will be described below.

### Example 1 (not according to the present invention)

• Synthesis of polymer A-1

In a four-neck round bottom flask attached with a reflux condenser and a dropping funnel and sealed with nitrogen, compound A (25 g), silaplane FM0721 (6.25 g, made by JNC Corporation), 2-hydroxylethyl methacrylate (18.75 g), methyl methacrylate (12.5 g) and methyl ethyl ketone (61.97 g) were put, and the resulting mixture was refluxed and degassed for 15 minutes using an oil bath, and then a solution prepared by dissolving azobisisobutyronitrile (0.477 g) and mercaptoacetic acid (0.054 g) into methyl ethyl ketone (4.78 g) was charged thereinto to start polymerization. After 3 hours from polymerization start, a solution obtained by dissolving azobisisobutyronitrile (0.477 g) into methyl ethyl ketone (4.29 g) was added, and the resulting mixture was aged for 5 hours to obtain a solution of a copolymer. Further, as a polymerization inhibitor, para-methoxyphenol (0.16 g) and dilauryl acid dibutyltin (0.154 g, made by Showa Denko K.K.) were dissolved into methyl ethyl ketone (1.54 g), and the resulting solution was added thereto, and then Karenz AOI (26.43 g) was added dropwise thereto using a dropping funnel in such a manner that a liquid temperature reached 35°C to 50°C, and after dropwise addition, the resulting mixture was aged at 45°C for 3 hours.
Then, methanol (9 g) was added thereto for treatment, and then para-methoxyphenol (0.16 g) was further added thereto, and the resulting mixture was diluted with methyl isobutyl ketone (107.34 g) to obtain a 30 wt% solution of objective polymer A-1.
Polymer A-1 obtained had weight average molecular weight: Mw 42,000 and polydispersity index: Mw/Mn 1.9. The weight average molecular weight and the polydispersity index were measured using gel permeation chromatography (GPC, model number: Alliance 2695, made by Waters Corporation, column: Shodex GPC KF-804L × 2 (series), guard column: KF-G).
Compound A has a molecular structure represented by the following formula (IV).

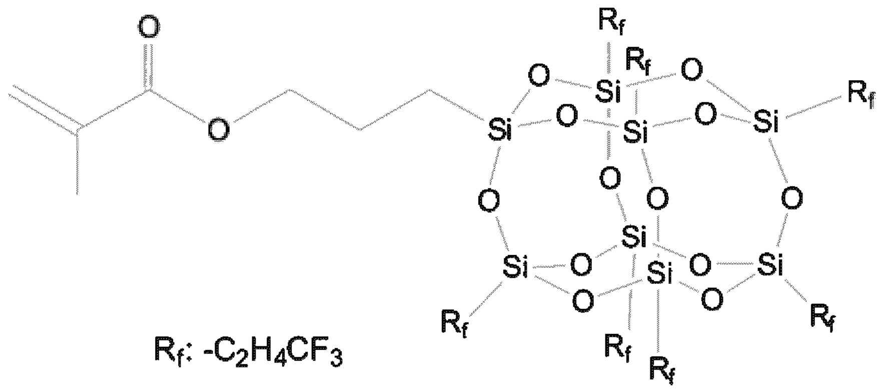

$R_f$: $-C_2H_4CF_3$

(IV)

• Preparation of coating agent A

In a 0.5 L scale-stainless steel bottle, polymer A-1 (2.22 g), pentaerythritol triacrylate (57.46 g), 1,6-hexanediol diacrylate (3.19 g), a urethane acrylate oligomer having a urethane acrylate functional group (6.02 g), α-hydroxyacetophenone (3.19 g), methyl isobutyl ketone (97.91 g) and ethyl acetate (56.67 g) were put, and the resulting mixture was stirred for 1 hour by a stirring blade to obtain coating agent A having a solid component (effective component) of 30%

by weight.

• Preparation of adhesive A

To acrylic adhesive A being a copolymer containing 40 to 55 parts by weight of butyl acrylate, 40 to 55 parts by weight of methyl acrylate, 1 to 15 parts by weight of vinyl acetate and 0.1 to 3 parts by weight of carboxyl group-containing acrylic oxide, 30 parts by weight of ethyl acetate were added, and the resulting mixture was stirred for 30 minutes at 23°C by a stirring blade to be adjusted to a solid component of 23% by weight and viscosity of 1,000 CPS. Weight average molecular weight (Mw) of adhesive A is 550,000, and a glass transition temperature thereof is -16°C.

• Creation of film 1 for plastic restoration

Prepared adhesive A was applied, by die coating, onto a thermoplastic polyurethane film being the thermoplastic polyurethane film (trade name: Argotec 49510, made by Argotec, LLC, a thickness: 6 mil = 152.4 μm) prepared by laminating, on one surface, a 50 μm polyethylene terephthalate protection film, and the resulting material was dried under conditions of 70°C × 3 minutes to form a 30 μm adhesive layer. Further, a 75 pm-thick polyethylene terephthalate film (release film A; surface roughness: 716 nm) subjected to release treatment with a silicone resin was pressure-bonded onto an adhesive layer surface by using a rubber roller, and the resulting material was cured for 1 day in a 45°C environment. Then, the 50 μm polyethylene terephthalate protection film was peeled off, and coating agent A was applied, by using a coating rod No. 6 (made by R.D.S., Webster, N.Y.), onto a surface from which the film was peeled off, and the resulting material was dried under conditions of 90°C × 3 minutes. Then, the resulting material was photo-cured (integrated quantity of light: 850 mJ/$cm^2$) by using a conveyer-type ultraviolet irradiation device equipped with an H-Bulb made by Fusion Total Ultraviolet Systems, Inc. to obtain film 1 for plastic restoration.

• Creation of Example 1

A release film of film 1 for plastic restoration cut into a size of a width of 40 mm and a length of 130 mm was peeled off, and an aqueous solution prepared by mixing 2 to 3 drops of baby shampoo (baby whole body shampoo; made by Johnson & Johnson Consumer Inc.) to 1 L of water was sprayed, by a sprayer, onto a surface on an adhesive layer surface side and adherend A described later, and an adhesive layer surface of film 1 for plastic restoration was pasted onto a scratched surface of adherend A while air bubbles and water bubbles were pushed out by a rubber squeegee to obtain Example 1.

**Comparative Example 1**

• Creation of Comparative Example 1

After stains and dust on a surface of adherend A described later were wiped off, a proper amount of a commercially available repair kit liquid (trade name: Light One Headlight Refresh, made by SOFT99 corporation) was incorporated into cloth and thinly applied onto adherend A and spread thereon. After drying for about 1 minute, the surface was lightly leveled with cloth in such a manner that application marks are not marked, and the adherend was left to stand for 3 to 4 days at room temperature for curing a coating film to obtain Comparative Example 1.

**Comparative Example 2**

• Creation of PET base material adhesive film A

An adhesive (trade name: SK-Dyne 1499M, made by Soken Chemical & Engineering Co., Ltd.) was applied onto polyethylene terephthalate having a PET base material thickness of 38 μm by die coating, and the resulting material was dried under conditions of 90°C × 3 minutes to form a 3 μm adhesive layer. Further, a 25 μm-thick polyethylene terephthalate film subjected to release treatment with a silicone resin was pressure-bonded onto a surface of the adhesive layer by using a rubber roller, and the resulting material was cured for two days in an environment of 45°C to obtain PET base material adhesive film A.

• Creation of Comparative Example 2

A release film of PET base material adhesive film A cut into a size of a width of 40 mm and a length of 130 mm was peeled off, and an aqueous solution prepared by mixing 2 to 3 drops of baby shampoo (baby whole body shampoo;

made by Johnson & Johnson Consumer Inc.) to 1 L of water was sprayed, by a sprayer, onto a surface on an adhesive layer surface side and adherend A described later, and an adhesive layer surface of PET base material adhesive film A was pasted onto a scratched surface of adherend A while air bubbles and water bubbles were pushed out by a rubber squeegee to obtain Comparative Example 2.

**Reference Example 1**

• Preparation of hard coat agent A for plastic

In a 0.5 L scale-stainless steel bottle, polyfunctional urethane acrylate (21.4 g, trade name: Shiko UV1700B, made by The Nippon Synthetic Chemical Industry Co., Ltd.), difunctional acrylate (7.13 g, trade name: NK Ester A-HD, made by Shin-Nakamura Chemical Co., Ltd.), silica fine particle dispersion distributed in methoxypropyl acetate propylene glycol monoethyl ether acetate (47.5 g, trade name: PGM-AC- 2140Y, made by Nissan Chemical Industries, Ltd.), methoxypropanol propylene glycol monomethyl ether (21.5 g, made by Nippon Nyukazai Co., Ltd.), $\alpha$-hydroxyacetophenone (3.19 g), methyl isobutyl ketone (97.91 g) and a photopolymerization initiator (2.5 g, trade name: Irgacure 127, made by BASF SE) were put, and the resulting mixture was stirred for 1 hour by a stirring blade to obtain hard coat agent A for plastic having a solid component (effective component) of 50% by weight.

• Creation of test body A

Test body A is a sample for testing of a polycarbonate sheet subjected to hard coat treatment on both surfaces.
Plastic hard coat A was put in a stainless steel container, and a polycarbonate sheet (thickness: 2 mm, width: 70 mm, length: 150 mm, trade name: Panlite PC1151) was applied to both surfaces by using a dip coater (made by ASUMI GIKEN, Limited) under conditions of a dipping speed of 5 mm/sec and a pulling-up speed of 0.5 mm/sec, and the resulting material was dried under conditions of 80°C $\times$ 1 minute, and then was photo-cured (integrated quantity of light: 850 $mJ/cm^2$) by using a conveyer-type ultraviolet irradiation device equipped with an H-Bulb made by Fusion Total Ultraviolet Systems, Inc. to obtain test body A (Reference Example 1).

**Reference Example 2**

• Creation of adherend A

Adherend A is a sample for testing prepared by scratching test body A to increase turbidity (haze).
Adherend A (Reference Example 2) was created by scratching, by using sandpaper (#800), one surface of test body A of **Reference Example 1.**

(Testing method)

(1) Optical characteristics after pasting and repair

Total luminous transmittance and haze were measured, by using a haze meter (Suga Test Instrument Hz-2), by setting Example 1, Comparative Example 1 and Comparative Example 2 on a side of an aperture of an integrating sphere in a "sample measurement chamber" by a "sample holder" (JIS K7105, Table 2) . A case where a restoration effect was able to be visually confirmed was taken as "good," and a case where no restoration effect was able to be confirmed was taken as "poor" (Table 3).

(2) Working time

In cases of Example 1 and Comparative Example 2, an aqueous solution was sprayed, by a sprayer, onto an adhesive layer side and adherend A, and the adhesive layer surface was pasted to a scratched surface of adherend A while air bubbles and water bubbles were pushed out by a rubber squeegee. Then, the sample was left to stand at room temperature, and a time until air bubbles and water bubbles remaining on the adhesive layer surface and a coated plate visually disappeared was measured.
In a case of Comparative Example 1, after stains and dust on the surface of adherend A were wiped off, a proper amount of a repair kit liquid was incorporated into cloth and thinly applied onto adherend A and spread thereon, and the resulting material was dried for about 1 minute, and then a time until a coating film was cured was measured.

(3) Chipping test

Then, 50 g of crushed stones (No. 7) were allowed to collide with Example 1, Comparative Example 1 and Comparative Example 2 at 40 km/h by using a simplified chipping tester (JNC Corporation in-house) . Then, film 1 for plastic restoration and PET base material adhesive film A pasted onto Example 1 and Comparative Example 2 were peeled off, and a general appearance was visually confirmed. For Comparative Example 1, a general appearance after the test was confirmed.

(4) Contact angle measurement

A contact angle on the surface layer of Example 1, Comparative Example 1 and Comparative Example 2 each was measured by using a contact-angle meter (Drop Master 400; made by Kyowa Interface Science Co., Ltd.), and using, as the probe liquid, distilled water (for nitrogen and phosphorus measurement, made by Kanto Chemical Co., Inc.) and methylene iodide (made by Sigma-Aldrich Co. LLC).

(5) Stain-proof properties evaluation

Drawing was made on the surface layer of Example 1, Comparative Example 1 and Comparative Example 2 by using a black oily marker (made by Sharpie, Inc.), and repellency of oily ink and wiping-off properties by Dusper K-3 (made by OZU Corporation) were evaluated.

The optical characteristics of Reference Examples, Example and Comparative Examples are shown below.

**Table 2**

Table 2: Optical characteristics

| | Reference Example 1 | Reference Example 2 | Example 1 | Com parative Example 1 | Comparative Example 2 |
|---|---|---|---|---|---|
| Configuration | Test body A | Adherend A | Adherend A + Restoration film | Adherend A + Repair kit | Adherend A + PET base material |
| Total luminous transmittance (%T) | 91.0 | 91.0 | 91.0 | 91.0 | 91.0 |
| Haze(%) | 0.8 | 12.7 | 1.3 | 1.6 | 11.5 |

When adherend A in Reference Example 2 is compared with adherend A in Reference Example 1, a haze value of adherend A in Reference Example 2 is increased by a scratch. However, when the film for plastic restoration of Example 1 was pasted onto adherend A, the haze value was reduced. Also in visual inspection, the scratch on adherend A became hard to see. More specifically, adherend A was restored by the film for plastic restoration, and transparency was recovered. Further, a degree (reduction of the haze value) of restoration was superior to the restoration with the commercially available repair kit (Comparative Example 1).

The test results of Example and Comparative Examples are shown below.

**Table 3**

Table 3 Test results

| | | Example 1 | Comparative Example 1 | Comparative Example 2 |
|---|---|---|---|---|
| Configuration | | Adherend A + Restoration film | Adherend A + Repair kit | Adherend A + PET |

(continued)

| | | Example 1 | Comparative Example 1 | Comparative Example 2 |
|---|---|---|---|---|
| Optical characteristics after pasting and repair | | Good | Good | Good |
| Working time | | 20 minutes | 3 to 4 days | 20 minutes |
| Durability (chipping test) | | Not scratched at all | Scratched | Slightly scratched |
| Contact angle | Distilled water | 101° | 96° | 84° |
| | Methylene Iodide | 70° | 60° | 29° |
| Antifouling property | Repellency | Linearly repelled | No repellency at all | No repellency at all |
| | Wiping-off properties | Easily wiped off | Not wiped off, all marks remain | Not wiped off |

In Example 1 and Comparative Example 1, restoration of deterioration (scratches) of adherend A was able to be confirmed. Further, while installation takes 3 to 4 days are required for working in Comparative Example 1, working is completed for about 20 minutes in Example 1 because the film for plastic restoration of the invention is only pasted thereon. Thus, in the film for plastic restoration of the invention, working is significantly easy.

Further, the film for plastic restoration of the invention has a protection function in addition to a restoration function to protect adherend A from the scratch and the stains, and the effect thereof was superior to the effect of protection by the commercially available repair kit (Comparative Example 1).

Use of the noun and the similar directive used in connection with the description (particularly with reference to the following claims) in the present invention, or particularly pointed out herein, unless otherwise indicated herein or otherwise clearly contradicted by context, is to be construed to cover both the singular form and the plural form. The terms "comprising," "having," "including" and "containing," unless otherwise noted, be construed as open-ended terms (namely, meaning "including, but not limited to"). Recitations of numerical ranges herein, unless otherwise indicated herein, is intended merely to serve as shorthand for referring individually each value falling within its scope and which, each value, as if it were individually recited herein, are incorporated herein. All of the methods described herein, or particularly pointed out herein, unless otherwise indicated herein or otherwise clearly contradicted by context, can be performed in any suitable order. The use of any and all examples, or exemplary language ("such as") provided herein, is intended merely to better illustrate the invention and does not pose a limitation on the scope of the invention unless otherwise claimed. No language herein should be construed as indicating any non-claimed element as essential to the practice of the invention.

Preferred embodiments of the invention are described herein, including the best modes known to the present inventors for carrying out the invention. Variations of the preferred embodiments may become apparent to those having ordinary skill in the art upon reading the foregoing description. The present inventors expect skilled artisans to employ such variations as appropriate, and the present inventors intend for the invention to be practised otherwise than as specifically described herein. Further, particularly pointed out herein, unless otherwise indicated or otherwise clearly contradicted by context, any combination of the above-described elements in all possible variations thereof is encompassed by the invention.

**Reference Signs List**

- 10 Film for plastic restoration
- 11 Base material film
- 12 Surface layer
- 13 Adhesive layer
- 14 Release film
- s1 Surface
- ss Fluorine compound

## Claims

1. A film for plastic restoration (10), being **characterized by** comprising:

   a base material film (11) formed of thermoplastic polyurethane; and
   an adhesive layer (13) formed on a first surface side of the base material film (11) and containing a bluish dye, wherein the adhesive layer (13) is composed of at least one resin selected from an acrylic resin, a urethane-based resin, a rubber-based resin and a silicone-based resin, and a refractive index of the adhesive layer (13) is 1.40 to 1.70, and surface roughness of the adhesive layer (13) is 350 to 750 nanometers.

2. The film for plastic restoration (10) according to claim 1, wherein the base material film is configured in such a manner that the base material film (11) has a surface layer (12) in which the thermoplastic polyurethane and a curable resin composition are mixed on a side opposite to the first surface, and a content proportion of the curable resin composition gradually decreases from a surface (s1) of the surface layer (12) toward the base material film (11), and the curable resin composition contains at least one fluorine compound (ss) selected from the group of fluorosilsesquioxane and a fluorosilsesquioxane polymer, and a curable resin.

3. The film for plastic restoration (10) according to claim 2, wherein the fluorine compound (ss) has a cage structure, and the curable resin contains at least one compound having a (meth)acryloyl group.

4. The film for plastic restoration (10) according to claim 2 or 3, wherein the fluorosilsesquioxane polymer is an addition polymer of fluorosilsesquioxane having at least one addition-polymerizable functional group, or an addition copolymer of fluorosilsesquioxane having one addition-polymerizable functional group and an addition-polymerizable monomer.

5. The film for plastic restoration (10) according to any one of claims 1 to 4, comprising a release film (14) provided on a surface of the adhesive layer (13) opposite to the base material film (11), wherein surface roughness of a surface of the release film (14) in contact with the adhesive layer (13) is 350 to 800 nanometers.

6. The film for plastic restoration (10) according to claim 5, wherein the adhesive layer (13) has a projection and recess shape exhibiting the surface roughness for 10 to 120 minutes after the release film (14) is peeled off.

7. The film for plastic restoration (10) according to claim 5 or 6, wherein at least one release agent selected from a fluorocarbon-based resin and a silicone resin is applied to the surface of the release film (14) in contact with the adhesive layer (13).

8. A surface protected article, being **characterized by** comprising:

   the film for plastic restoration (10) according to any one of claims 1 to 4; and
   an article in which the film for plastic restoration (10) is pasted on a surface by the adhesive layer (13).

9. A method for producing a film for plastic restoration (10), being **characterized by** comprising:

   a step of providing a base material film (11) formed of thermoplastic polyurethane;
   a step of forming, on a first surface side of the base material film (11), an adhesive layer (13) containing a bluish dye, wherein the adhesive layer (13) is composed of at least one resin selected from an acrylic resin, a urethane-based resin, a rubber-based resin and a silicone-based resin, and, in the adhesive layer (13), surface roughness on a side opposite to the base material film (11) is 350 to 750 nanometers;
   a step of applying a curable resin composition on a second surface of the base material film (11) on a side opposite to the first surface to permeate the curable resin composition into the base material film (11); and
   a step of irradiating the curable resin composition with ultraviolet light,
   wherein the curable resin composition contains at least one fluorine compound (ss) selected from the group of fluorosilsesquioxane and a fluorosilsesquioxane polymer, and a curable resin, and a refractive index of the adhesive layer (13) is 1.40 to 1.70.

## Patentansprüche

1. Film zur Kunststoffrestaurierung (10), **dadurch gekennzeichnet, dass** er umfasst:

einen Basismaterialfilm (11), der aus thermoplastischem Polyurethan gebildet ist; und
eine Klebeschicht (13), die auf einer ersten Oberflächenseite des Basismaterialfilms (11) gebildet ist und einen bläulichen Farbstoff enthält,
wobei die Klebeschicht (13) aus wenigstens einem Harz zusammengesetzt ist, ausgewählt aus einem Acrylharz, einem Harz auf Urethanbasis, einem Harz auf Kautschukbasis und einem Harz auf Silikonbasis, und ein Brechungsindex der Klebeschicht (13) 1,40 bis 1,70 beträgt und die Oberflächenrauheit der Klebeschicht (13) 350 bis 750 Nanometer beträgt.

**2.** Film zur Kunststoffrestaurierung (10) gemäß Anspruch 1, wobei der Basismaterialfilm in solch einer Weise konfiguriert ist, dass der Basismaterialfilm (11) eine Oberflächenschicht (12) aufweist, in der das thermoplastische Polyurethan und eine härtbare Harzzusammensetzung auf einer Seite, gegenüber der ersten Oberfläche gemischt sind, und ein Inhaltsverhältnis der härtbaren Harzzusammensetzung allmählich von einer Oberfläche (s1) der Oberflächenschicht (12) in Richtung des Basismaterialfilms (11) abnimmt, und die härtbare Harzzusammensetzung wenigstens eine Fluorverbindung (ss), ausgewählt aus der Gruppe von Fluorsilsesquioxan und einem Fluorsilsesquioxanpolymer, und ein härtbares Harz enthält.

**3.** Film zur Kunststoffrestaurierung (10) gemäß Anspruch 2, wobei die Fluorverbindung (ss) eine Käfigstruktur aufweist und das härtbare Harz wenigstens eine Verbindung, aufweisend eine (Meth)acryloylgruppe, enthält.

**4.** Film zur Kunststoffrestaurierung (10) gemäß Anspruch 2 oder 3, wobei das Fluorsilsesquioxanpolymer ein Additionspolymer von Fluorsilsesquioxan, aufweisend wenigstens eine additionspolymerisierbare funktionelle Gruppe oder ein Additionscopolymer von Fluorsilsesquioxan, aufweisend eine additionspolymerisierbare funktionelle Gruppe und ein additionspolymerisierbares Monomer, ist.

**5.** Film zur Kunststoffrestaurierung (10) gemäß irgendeinem der Ansprüche 1 bis 4, umfassend einen Ablösefilm (14), der auf einer Oberfläche der Klebeschicht (13) gegenüber dem Basismaterialfilm (11) bereitgestellt ist, wobei die Oberflächenrauheit von einer Oberfläche des Ablösefilms (14) in Kontakt mit der Klebeschicht (13) 350 bis 800 Nanometer beträgt.

**6.** Film zur Kunststoffrestaurierung (10) gemäß Anspruch 5, wobei die Klebeschicht (13) eine Vorsprungs- und Vertiefungsform aufweist, die die Oberflächenrauheit für 10 bis 120 Minuten zeigt, nachdem der Ablösefilm (14) abgezogen ist.

**7.** Film zur Kunststoffrestaurierung (10) gemäß Anspruch 5 oder 6, wobei wenigstens ein Ablösemittel, ausgewählt aus einem Harz auf Fluorkohlenstoffbasis und einem Silikonharz, auf die Oberfläche des Ablösefilms (14) in Kontakt mit der Klebeschicht (13) aufgetragen ist.

**8.** Oberflächengeschützter Gegenstand, **dadurch gekennzeichnet, dass** er umfasst:

den Film zur Kunststoffrestaurierung (10) gemäß irgendeinem der Ansprüche 1 bis 4; und
einen Gegenstand, in dem der Film für die Kunststoffrestaurierung (10) durch die Klebeschicht (13) auf eine Oberfläche geklebt ist.

**9.** Verfahren zur Herstellung eines Films zur Kunststoffrestaurierung (10), **gekennzeichnet dadurch, dass** es umfasst:

einen Schritt zum Bereitstellen eines Basismaterialfilms (11), der aus thermoplastischem Polyurethan gebildet ist;
einen Schritt zum Bilden, auf einer ersten Oberflächenseite des Basismaterialfilms (11), einer Klebeschicht (13), die einen bläulichen Farbstoff enthält, wobei die Klebeschicht (13) aus wenigstens einem Harz zusammengesetzt ist, ausgewählt aus einem Acrylharz, einem Harz auf Urethanbasis, einem Harz auf Kautschukbasis und einem Harz auf Silikonbasis, und in der Klebeschicht (13), die Oberflächenrauheit auf einer Seite, gegenüber dem Basismaterialfilm (11) 350 bis 750 Nanometer beträgt;
einen Schritt zum Auftragen einer härtbaren Harzzusammensetzung auf eine zweite Oberfläche des Basismaterialfilms (11) auf einer Seite, gegenüber der ersten Oberfläche, um die härtbare Harzzusammensetzung in den Basismaterialfilm (11) zu permeieren; und
ein Schritt zum Bestrahlen der härtbaren Harzzusammensetzung mit ultraviolettem Licht,
wobei die härtbare Harzzusammensetzung wenigstens eine Fluorverbindung (ss), ausgewählt aus der Gruppe von Fluorsilsesquioxan und einem Fluorsilsesquioxanpolymer, und ein härtbares Harz enthält, und ein Brechungsindex der Klebeschicht (13) 1,40 bis 1,70 beträgt.

## Revendications

1. Film de restauration de plastique (10), étant **caractérisé en ce qu'**il comprend :

   un film de matériau de base (11) formé de polyuréthane thermoplastique ; et
   une couche adhésive (13) formée sur un premier côté de surface du film de matériau de base (11) et contenant un colorant bleuté, dans lequel la couche adhésive (13) est composée d'au moins une résine sélectionnée parmi une résine acrylique, une résine à base d'uréthane, une résine à base de caoutchouc et une résine à base de silicone, et un indice de réfraction de la couche adhésive (13) est de 1,40 à 1,70, et une rugosité de surface de la couche adhésive (13) est de 350 à 750 nanomètres.

2. Film de restauration de plastique (10) selon la revendication 1, dans lequel le film de matériau de base est configuré de telle manière que le film de matériau de base (11) a une couche de surface (12) dans laquelle le polyuréthane thermoplastique et une composition de résine durcissable sont mélangés sur un côté opposé de la première surface, et une proportion de teneur de la composition de résine durcissable diminue graduellement à partir d'une surface (s1) de la couche de surface (12) en direction du film de matériau de base (11), et la composition de résine durcissable contient au moins un composé de fluor (ss) sélectionné dans le groupe du fluorosilsesquioxane et d'un polymère de fluorosilsesquioxane, et une résine durcissable.

3. Film de restauration de plastique (10) selon la revendication 2, dans lequel le composé de fluor (ss) a une structure de cage, et la résine durcissable contient au moins un composé ayant un groupe (méth)acryloyle.

4. Film de restauration de plastique (10) selon la revendication 2 ou 3, dans lequel le polymère de fluorosilsesquioxane est un polymère d'addition de fluorosilsesquioxane ayant au moins un groupe fonctionnel polymérisable par addition, ou un copolymère d'addition de fluorosilsesquioxane ayant un groupe fonctionnel polymérisable par addition et un monomère polymérisable par addition.

5. Film de restauration de plastique (10) selon l'une quelconque des revendications 1 à 4, comprenant un film antiadhésif (14) fourni sur une surface de la couche adhésive (13) à l'opposé du film de matériau de base (11), dans lequel la rugosité de surface d'une surface du film antiadhésif (14) en contact avec la couche adhésive (13) est de 350 à 800 nanomètres.

6. Film de restauration de plastique (10) selon la revendication 5, dans lequel la couche adhésive (13) a une forme en saillies et cavités présentant la rugosité de surface pendant 10 à 120 minutes après le retrait du film antiadhésif (14).

7. Film de restauration de plastique (10) selon la revendication 5 ou 6, dans lequel au moins un agent antiadhésif sélectionné parmi une résine à base de fluorocarbone et une résine de silicone est appliqué sur la surface du film antiadhésif (14) en contact avec la couche antiadhésive (13).

8. Article à surface protégée, **caractérisé en ce qu'**il comprend :

   le film de restauration de plastique (10) selon l'une quelconque des revendications 1 à 4 ; et
   un article dans lequel le film de restauration de plastique (10) est collé sur une surface par la couche adhésive (13).

9. Procédé de production d'un film de restauration de plastique (10), étant **caractérisé en ce qu'**il comprend :

   une étape de fourniture d'un film de matériau de base (11) formé de polyuréthane thermoplastique ;
   une étape de formation, sur un premier côté de surface du film de matériau de base (11), d'une couche adhésive (13) contenant un colorant bleuté, dans lequel la couche adhésive (13) est composée d'au moins une résine sélectionnée parmi une résine acrylique, une résine à base d'uréthane, une résine à base de caoutchouc et une résine à base de silicone, et, dans la couche adhésive (13), la rugosité de surface sur un côté opposé au film de matériau de base (11) est de 350 à 750 nanomètres ;
   une étape d'application d'une composition de résine durcissable sur une seconde surface du film de matériau de base (11) sur un côté opposé à la première surface pour faire pénétrer la composition de résine durcissable dans le film de matériau de base (11) ; et

une étape d'irradiation de la composition de résine durcissable avec une lumière ultraviolette,
dans lequel la composition de résine durcissable contient au moins un composé de fluor (ss) sélectionné dans le groupe du fluorosilsesquioxane et d'un polymère de fluorosilsesquioxane, et une résine durcissable, et un indice de réfraction de la couche adhésive (13) est de 1,40 à 1,70.

Figure 1

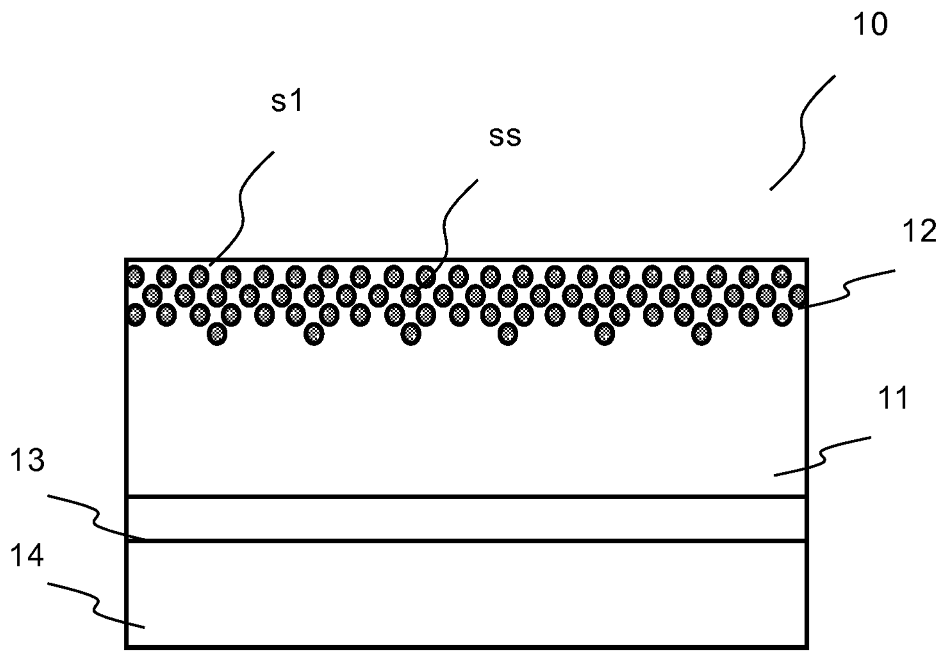


Figure 2

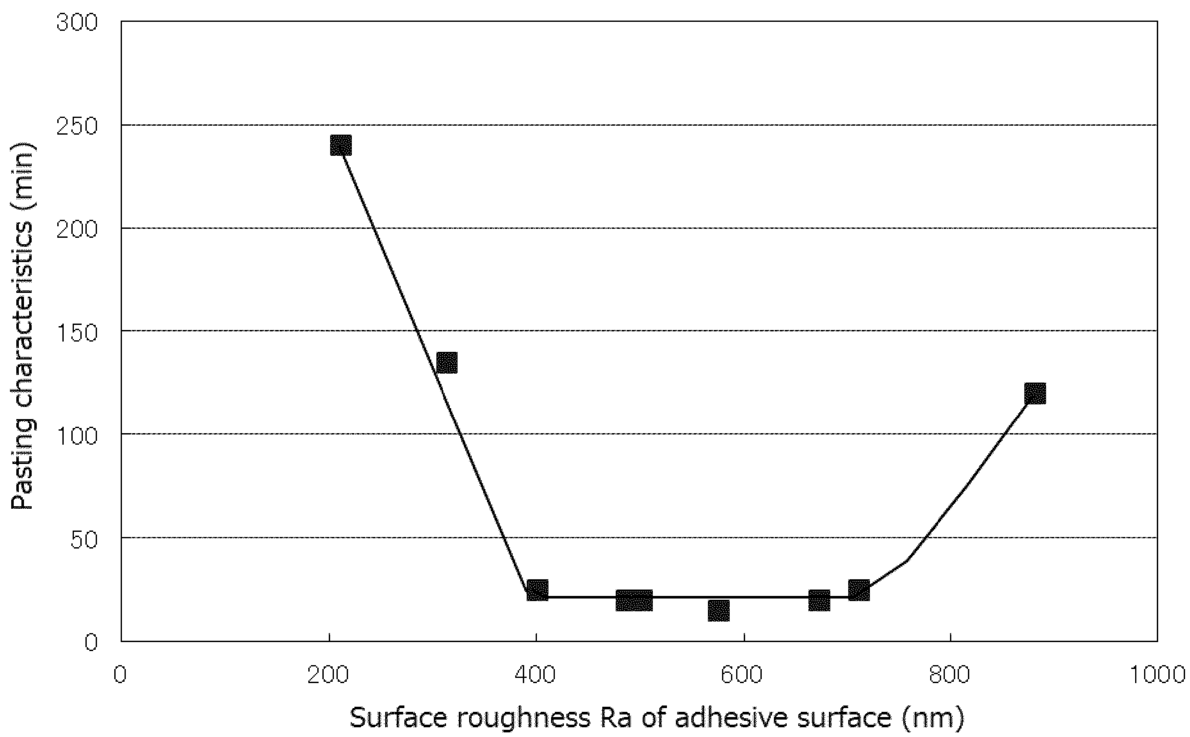

Figure 3

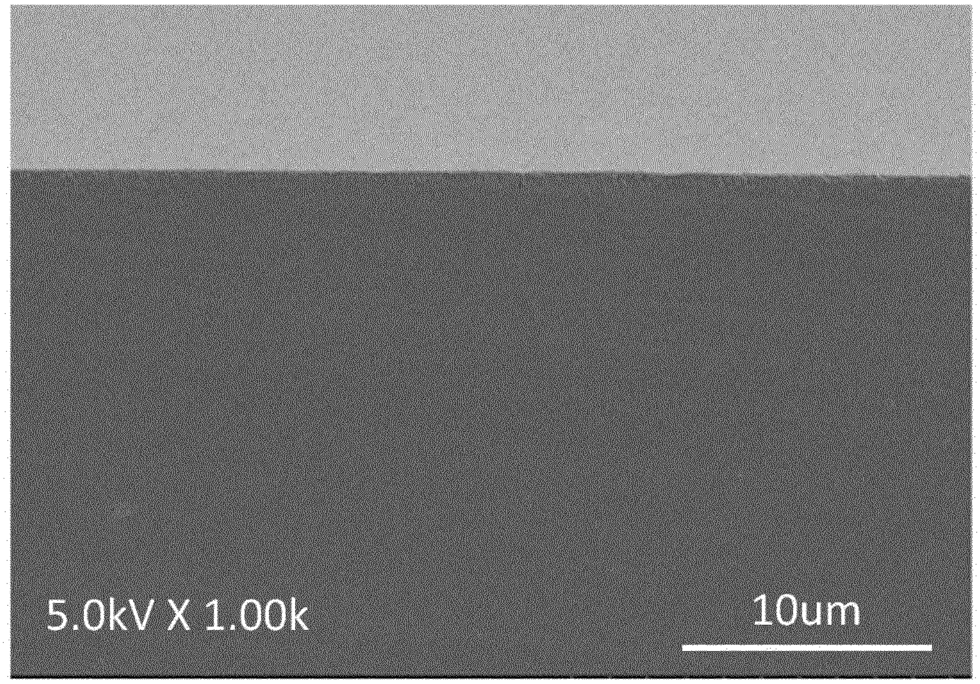

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010013523 A
- WO 201610041 A
- JP 2015185922 A
- JP 5050473 B